(19) Europäisches Patentamt
European Patent Office
Office européen des brevets

(11) **EP 4 693 092 A1**

(12) **EUROPEAN PATENT APPLICATION**
published in accordance with Art. 153(4) EPC

(43) Date of publication:
**11.02.2026 Bulletin 2026/07**

(21) Application number: **24862074.2**

(22) Date of filing: **06.09.2024**

(51) International Patent Classification (IPC):
*G06F 40/109* (2020.01)

(52) Cooperative Patent Classification (CPC):
**G06F 40/109; G06T 11/20**

(86) International application number:
**PCT/CN2024/117410**

(87) International publication number:
**WO 2025/051236 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 CN 202311167833**

(71) Applicant: **Huawei Technologies Co., Ltd.
Shenzhen, Guangdong 518129 (CN)**

(72) Inventors:
• **TANG, Minfang
 Shenzhen, Guangdong 518129 (CN)**
• **LIU, Meng
 Shenzhen, Guangdong 518129 (CN)**
• **ZHAO, Yunjing
 Shenzhen, Guangdong 518129 (CN)**
• **LIU, Liu
 Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **METHOD FOR BEAUTIFYING HANDWRITTEN CHARACTER AND ELECTRONIC DEVICE**

(57) A handwritten character beautification method is disclosed. Information about a first handwritten character may be obtained. In addition, a fusion style may be determined based on information about a first level, a handwritten character library, and a target font. The fusion style may indicate a style obtained after the target font and a handwritten font corresponding to a character in the handwritten character library are fused. Finally, a first beautified character corresponding to the first handwritten character is generated based on the information about the first handwritten character and the fusion style. In this way, a handwritten character of a user can be beautified based on the first level selected by the user, and a personal style of the handwritten character of the user can be retained in a finally presented beautification effect of the handwritten character. An electronic device is further disclosed.

Method 500

| 510: Obtain information about a first handwritten character |

| 520: Detect a first input operation of a user, and obtain information about a first level in response to the first input operation |

| 530: Determine a fusion style based on the information about the first level, a handwritten character library, and a target font |

| 540: Generate a first beautified character |

FIG. 5

**Description**

This application claims priority to Chinese Patent Application No. 202311167833.2, filed with the China National Intellectual Property Administration on September 8, 2023 and entitled "HANDWRITTEN CHARACTER BEAUTIFICATION METHOD AND ELECTRONIC DEVICE", which is incorporated herein by reference in its entirety.

**TECHNICAL FIELD**

This application relates to the field of handwriting on electronic whiteboards, and more specifically, to a handwritten character beautification method and an electronic device.

**BACKGROUND**

With rapid development of society, conventional teaching and conference systems have gradually been replaced with emerging electronic products. Cloud teaching, cloud conference, and the like have become widely known and accepted by the public, and a touch display device like an electronic whiteboard emerges. The touch display device replaces a conventional blackboard-and-chalk non-electronic device, which significantly reduces costs, is environmentally friendly, and can also better be interconnected to a cloud to meet diverse teaching or conference requirements. However, when most current whiteboard software or screens on the market are used for handwriting, handwritten characters on the screen often appear messy or unattractive due to screen slipperiness, software latency, and the like. As a result, fonts presented by using the electronic whiteboard are not aesthetically pleasing.

In existing solutions, a handwritten character written by a user on the electronic whiteboard is beautified mainly by using technologies such as character shape topology and handwritten character recognition. However, in current solutions, after handwritten characters written by different users on the electronic whiteboard are beautified, fonts become consistent, and consequently, users' personal handwriting styles are lost. In other words, the existing solutions offer a monotonous beautification effect, failing to provide personalized beautification effects of the handwritten characters tailored to different users.

**SUMMARY**

This application provides a handwritten character beautification method. The method can not only beautify a handwritten character of a user on a screen, but also retain the user's style of the handwritten character while beautifying the handwritten character, to provide different beautification effects of beautified characters tailored to different users.

According to a first aspect, a handwritten character beautification method is provided. The method may be performed by a terminal device (for example, a mobile phone or a laptop), or may be performed by a component (for example, a chip or a circuit) of a terminal device. This is not limited.

The method includes: obtaining information about a first handwritten character, where the first handwritten character is a character written by a user on a handwriting area of an electronic device; detecting a first input operation of the user, and obtaining information about a first level in response to the first input operation; determining a fusion style based on the information about the first level, a handwritten character library, and a target font, where the handwritten character library includes a character written by the user on the handwriting area of the electronic device and stored in the electronic device, the target font is one of fonts preset in a target font library of the electronic device, the fusion style indicates a style obtained after the target font and a handwritten font corresponding to the character included in the handwritten character library are fused, and the first level is used to determine a ratio between a target font style corresponding to the target font and a handwritten font style corresponding to the handwritten font in the fusion style; and generating a first beautified character, where the first beautified character is the first handwritten character beautified based on the information about the first handwritten character and the fusion style.

In this application, the "first handwritten character" is a character written by the user on an electronic whiteboard, a "second handwritten character" is a character that is in the handwritten character library of the user and that is stored in the terminal device, a "standard character" is a character preset in a standard character library of the terminal device, and a "target character" is a character corresponding to at least one font preset in the target font library of the terminal device. In this application, in a possible implementation, the handwritten character library of the user may be determined to be obtained by collecting a historical handwritten character written by the user. In another possible implementation, the terminal device may obtain the handwritten character library of the user by collecting a handwritten character currently written by the user.

In this application, the "information about the first level" may indicate the "first level", or may be understood as that the first level may be determined based on the information about the first level. The "first level" may be specified by the user. For example, the first level may be set to three levels: "low", "medium", and "high", or "weak", "medium", and "strong", or the like. The user may input a required first level in an interface of the terminal device.

In this application, the first level is used to determine the ratio between the target font style corresponding to the target font and the handwritten font style corresponding to the handwritten font in the fusion style. Alternatively, it may be understood as that the first level is used to determine a proportion of the target font style corresponding to the target font relative to the handwritten font style corresponding to the handwritten font in the fusion style. In this application, the "ratio" may also be replaced with the "proportion" for description.

In this application, different first levels may indicate ratios between the handwritten font style (namely, the handwritten font style corresponding to the handwritten character) and the target font style (namely, the target font style corresponding to the target character) in the fusion style. A higher first level indicates a higher proportion of the target font style in the fusion style of the generated beautified character, and a lower first level indicates a higher proportion of the handwritten font style in the fusion style of the generated beautified character. For example, if the first level selected by the user is "low", it indicates that the generated beautified character is more like the handwritten character of the user; or if the first level selected by the user is "high", it indicates that the generated beautified character is more like the target font selected by the user. Specifically, in a possible implementation, the first level affects a quantity of handwritten characters and a quantity of target characters, and in another possible implementation, the first level affects a ratio between a first coefficient corresponding to the handwritten font style and a second coefficient corresponding to the target font style.

In this application, the information about the first handwritten character includes an image corresponding to the first handwritten character and/or a trajectory corresponding to the first handwritten character.

In this application, the first input operation may be understood as, for example, a first instruction input by the user. The first instruction indicates the information about the first level.

Based on the foregoing technical solution, in this application, the information about the first handwritten character may be obtained. In addition, the fusion style may be determined based on the first level, the handwritten character library, and the target font. The fusion style may indicate the style obtained after the target font and the handwritten font corresponding to the handwritten character of the user in the handwritten character library are fused. Finally, the first beautified character corresponding to the first handwritten character is generated based on the information about the first handwritten character and the fusion style. In this way, a handwritten character of a user can be beautified based on the first level selected by the user, and a personal style of the handwritten character of the user can be retained in a finally presented beautification effect of the handwritten character.

With reference to the first aspect, in a possible implementation, the fonts preset in the target font library of the electronic device include at least two fonts, and the method further includes: receiving a second instruction, where the second instruction indicates the target font, and the target font is one of the at least two fonts; and determining the target font according to the second instruction.

In this application, the target font library of the electronic device may include a plurality of fonts, and the user may select one target font based on a requirement. In this application, a plurality of different fonts may be preset in the electronic device. For example, the plurality of different fonts may include KaiTi (regular script), LiSu (clerical script), SimSun, and the like. In some scenarios, if the user does not select the target font, the electronic device may use a specific font in the target font library as the target font by default. A manner of determining the target font is not limited in this application.

With reference to the first aspect, in a possible implementation, the method further includes: receiving a third instruction, where the third instruction indicates a second handwritten character, the second handwritten character is the character written by the user on the handwriting area of the electronic device, and the second handwritten character is used to generate the handwritten character library; and generating the handwritten character library according to the third instruction, where the handwritten character library includes one or more second handwritten characters.

For example, the "second handwritten characters" are some characters circled by the user in a segment of text previously written by the user, and these circled characters form the handwritten character library. For example, the "second handwritten characters" may be some characters circled by the user in the first handwritten characters currently written by the user, to form the handwritten character library. For example, there may be a large quantity of first handwritten characters. In this case, the user may circle some characters in the first handwritten characters as the second handwritten characters, to form the handwritten character library. For example, as long as the user writes a character on the handwriting area of the electronic device, the handwritten character may be automatically added to the handwritten character library. It may also be understood as that the second handwritten characters in the handwritten character library in this application may come from the first handwritten characters, or may come from the characters previously written by the user, or the like. This is not limited.

With reference to the first aspect, in a possible implementation, the method further includes: receiving a fourth instruction, where the fourth instruction indicates to update the second handwritten character in the handwritten character library; and generating an updated handwritten character library according to the fourth instruction, where the updated handwritten character library includes one or more updated second handwritten characters.

In this application, the handwritten character in the handwritten character library may also be updated. "Update" herein may be understood as replacing the handwritten character in the handwritten character library, or may be understood as adding a handwritten character to the handwritten character library. For example, subsequently, the user may write a segment of text again on the handwriting area of the electronic device, and circle some handwritten characters to replace the handwritten character in the handwritten character library.

With reference to the first aspect, in a possible implementation, determining the fusion style based on the information about the first level, the handwritten character library, and the target font includes: determining, based on the information about the first level, a first quantity of the second handwritten characters and a second quantity of target characters corresponding to the target font, where the first quantity and the second quantity are determined based on the information about the first level; and determining the fusion style based on the first quantity of the second handwritten characters and the second quantity of the target characters corresponding to the target font.

In this application, the first quantity of the second handwritten characters and the second quantity of the target characters may be extracted. Specifically, the fusion style may be determined in the following manners:

Manner 1:

In a possible implementation, the fusion style is determined by simultaneously extracting font styles of the first quantity of the second handwritten characters and the second quantity of the target characters. This implementation may also be understood as that the font styles are simultaneously extracted based on the first quantity of the second handwritten characters and the second quantity of the target characters (namely, all input characters), to obtain the fusion style.

Manner 2:

In another possible implementation, determining the fusion style based on the first quantity of the second handwritten characters and the second quantity of the target characters corresponding to the target font includes: extracting, character by character, a handwritten font style corresponding to each second handwritten character, and extracting, character by character, a target font style corresponding to each target character; and determining the fusion style based on the handwritten font style corresponding to each second handwritten character and the target font style corresponding to each target character. This implementation may also be understood as that a font style of each input handwritten character or each target character may be extracted character by character, and then reshape (Reshape) and splicing are performed on the extracted font style corresponding to each character, to obtain the fusion style.

Manner 3:

In another possible implementation, determining the fusion style based on the information about the first level, the handwritten character library, and the target font includes: determining any quantity of the second handwritten characters and any quantity of the target characters corresponding to the target font; determining, based on any quantity of the second handwritten characters, a handwritten font style corresponding to the second handwritten characters, and determining, based on any quantity of the target characters corresponding to the target font, a target font style corresponding to the target characters; determining a second ratio based on the information about the first level, where the second ratio is a ratio between a second coefficient and a first coefficient, the second coefficient indicates a proportion of the target font style in the fusion style, and the first coefficient indicates a proportion of the handwritten font style in the fusion style; and determining the fusion style based on the first coefficient, the handwritten font style, the second coefficient, and the target font style. In this implementation, a quantity of input handwritten characters and a quantity of target characters in a target character set are not limited. However, the extracted handwritten font style corresponding to the second handwritten characters and the target font style corresponding to the target characters may be weighted based on weighting coefficients corresponding to the handwritten font style and the target font style, to obtain the fusion style.

With reference to the first aspect, in a possible implementation, the method further includes: determining a first ratio based on the information about the first level, where the first ratio is a ratio between the second quantity and the first quantity; and determining the first quantity and the second quantity based on the first ratio.

In a specific implementation, for example, the first ratio is a ratio of the second quantity to the first quantity, and for another example, the first ratio is a ratio of the first quantity to the second quantity. This is not limited.

For example, in this application, a beautification module 130 may directly determine a quantity of handwritten characters and a quantity of target characters based on different first levels determined by the user. For example, if the first level selected by the user is "low", the beautification module 130 may directly determine that the quantity of handwritten characters is 7 and the quantity of target characters is 3. For example, if the first level selected by the user is "medium", the beautification module 130 may directly determine that the quantity of handwritten characters is 5 and the quantity of target characters is 5. For example, if the first level selected by the user is "high", the beautification module 130 may directly determine that the quantity of handwritten characters is 3 and the quantity of target characters is 7.

For example, the beautification module 130 may determine the first ratio based on the first level determined by the user. For example, the first ratio is a ratio between the quantity of handwritten characters and the quantity of target characters. The quantity of handwritten characters and the quantity of target characters are determined based on the first ratio. For example, if the first level selected by the user is "low", the beautification module 130 may determine that a ratio between the quantity of target characters and the quantity of handwritten characters is 3:7 (quantity of handwritten characters:quantity of target characters), and further determine that the quantity of handwritten characters is 7 and the quantity of target characters is 3. For example, if the first level selected by the user is "medium", the beautification module 130 may determine that a ratio between the quantity of target characters and the quantity of handwritten characters is 5:5 (quantity of handwritten characters:quantity of target characters), and further determine that the quantity of handwritten characters is 5 and the quantity of target characters is 5. For example, if the first level selected by the user is "high", the beautification module 130 may determine that a ratio between the quantity of target characters and the quantity of handwritten characters is 7:3 (quantity of handwritten characters:quantity of target characters), and further determine that the quantity of handwritten characters is 3 and the quantity of target characters is 7.

Based on the foregoing technical solutions, in this application, multi-level handwritten character beautification effects may be implemented based on the first levels selected by the user. In addition, in the handwritten character beautification effect in this application, a personal style of the handwritten character of the user may be retained. The user may select different first levels to implement whether a finally presented beautified character trends to the handwritten character style of the user or the target font style.

With reference to the first aspect, in a possible implementation, generating the first beautified character includes: determining, based on the information about the first handwritten character, a standard character corresponding to the first handwritten character, where the standard character is a character preset in a standard character library of the electronic device; and generating the first beautified character based on the standard character and the fusion style.

In this application, the "standard character" may be understood as a well-structured character with a correct stroke order. The standard character may be a character without any font, or the standard character may be a character with a font, which is not limited.

With reference to the first aspect, in a possible implementation, generating the first beautified character based on the standard character and the fusion style includes: extracting a content feature corresponding to the standard character, where the content feature is used to determine the standard character; and generating the first beautified character based on the content feature and the fusion style.

In this application, the "content feature" may indicate, for example, information about a stroke structure of the standard character and/or semantic information of the standard character. For example, a specific standard character may be determined based on the content feature.

With reference to the first aspect, in a possible implementation, the method further includes: determining stroke information of the standard character, where the stroke information includes a stroke order of the standard character and/or a stroke type of the standard character; and generating the first beautified character based on the content feature and the fusion style includes: generating the first beautified character based on the content feature, the fusion style, and the stroke information of the standard character.

Based on the foregoing technical solution, a problem of font collapse occurring in a trajectory of generating a beautified character can be effectively alleviated, an error rate of the generated beautified character is reduced, and generation quality of the beautified character is improved.

With reference to the first aspect, in a possible implementation, generating the first beautified character based on the standard character and the fusion style includes: generating the first beautified character based on the standard character, the fusion style, and a first model, where a training dataset of the first model includes at least one of the following: a handwritten character training dataset, a target character training dataset, and a beautified character training dataset, and the beautified character training dataset includes training beautified characters at different first levels.

With reference to the first aspect, in a possible implementation, the trained beautified character is obtained based on a first training standard character, a first training handwritten character set, a first training target character set, and a second model. The first training handwritten character set includes a third quantity of training handwritten characters, the first training target character set includes a fourth quantity of training target characters, and the third quantity and the fourth quantity are determined based on the information about the first level. A training dataset of the second model is the handwritten character training dataset, and when the second model is trained, an input of the second model is a second training standard character and a second training handwritten character set; and a training label is the second training handwritten character set. Alternatively, a training dataset of the second model is the target character training dataset, and when the second model is trained, an input of the second model is a second training standard character and a second training target character set; and a training label is the second training target character set.

It should be understood that a dataset in this application may be a public dataset, and the dataset is used to train a beautified character model. For example, the dataset may further include a training dataset and an inference dataset. The training dataset is used for model training, and the inference dataset is used for model inference. For example, the training dataset may include a standard character training dataset, a handwritten character training dataset, and a target character training dataset. For example, the inference dataset may include a standard character inference dataset, a handwritten character inference dataset, and a target character inference dataset. In this application, the training dataset and the inference dataset are not distinguished, and are collectively referred to as a "training dataset".

In this application, it is considered that when the first level is high, the proportion of the target font style corresponding to the target font gradually increases, and an error rate of a generated beautified character increases. This is because, in most cases, the handwritten character written by the user on the electronic whiteboard in the training dataset is usually sloppy and not neat. As a result, when the proportion of the target font is high at a high first level, an error is likely to occur when a "decoder" in the model reconstructs the character. In addition, re-collecting a neatly handwritten character incurs certain labor costs. In view of this, to expand the training dataset of the model and improve performance of the model, this application proposes that because an output of the second model is beautified characters at different levels, an output result of the second model may be used as an input of the first model, to further train the first model and optimize performance of the first model. In this way, beautified characters output by the model are more accurate, and generation quality of the beautified characters is higher.

It should be understood that the first model and the second model in this application may be a same model. In this case, it is equivalent to that an output result of the first model is used as an input of the first model again, and the first model is trained again, to optimize the performance of the first model.

With reference to the first aspect, in a possible implementation, the method further includes: determining a calligraphic stroke width of the first beautified character, and/or smoothing the calligraphic stroke width of the first beautified character; and rendering the first beautified character based on the calligraphic stroke width and/or a smoothed calligraphic stroke width, to generate the first beautified character after rendering.

According to the foregoing proposed method for rendering a beautified character, a change of a calligraphic stroke width of a generated beautified character can be implemented. This is closer to a feature of actually writing a character on the electronic whiteboard by the user, and improves user experience.

With reference to the first aspect, in a possible implementation, the method further includes: determining format information of the first handwritten character, where the format information of the first handwritten character includes at least one of the following: a location of the first handwritten character, a size of the first handwritten character, a length-width ratio of the first handwritten character, and a direction of the first handwritten character; determining format information of the first beautified character based on the format information of the first handwritten character, where the format information of the first beautified character includes at least one of the following: a location of the first beautified character, a size of the first beautified character, a length-width ratio of the first beautified character, and a direction of the first beautified character; and performing single-character adjustment on the first beautified character based on the format information of the first beautified character.

Based on the foregoing technical solution, in this application, information such as a size and a location of a handwritten character can be retained, so that the handwritten character does not become misplaced after being beautified. Alternatively, it may be understood as that the generated beautified character in this application can be better fitted to the handwritten character.

With reference to the first aspect, in a possible implementation, the method further includes: performing multi-character adjustment on a plurality of first beautified characters, where the multi-character adjustment includes at least one of the following: adjusting a character spacing between adjacent first beautified characters; and/or line-aligning the plurality of first beautified characters; and/or adjusting sizes of all first beautified characters in one or more lines.

Based on the foregoing technical solution, in this application, to make display effects of the plurality of beautified characters neater and more beautiful and improve user experience, this application further proposes to optimize the character spacing, a line spacing, and the like of the plurality of beautified characters.

According to a second aspect, an electronic device is provided. The electronic device is configured to perform the method according to any possible implementation of the first aspect. Specifically, the electronic device may include units and/or modules, for example, a transceiver unit and/or a processing unit, configured to perform the method according to any one of the possible implementations of the first aspect.

In an implementation, the electronic device is a terminal device, a communication unit may be a transceiver or an input/output interface, and the processing unit may be at least one processor. Optionally, the transceiver may be a transceiver circuit. Optionally, the input/output interface may be an input/output circuit.

In another implementation, the electronic device is a chip, a chip system, or a circuit used in a terminal device. When an apparatus is the chip, the chip system, or the circuit used in the electronic device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a third aspect, an electronic device is provided. The electronic device includes at least one processor, configured to execute a computer program or instructions stored in a memory, to perform the method according to any one of the possible implementations of the first aspect. Optionally, an apparatus further includes the memory, configured to store the computer program or the instructions. Optionally, an apparatus further includes a communication interface, and the processor reads, through the communication interface, the computer program or the instructions stored in the memory.

In an implementation, the electronic device is a terminal device.

In another implementation, the electronic device is a chip, a chip system, or a circuit used in a terminal device.

According to a fourth aspect, this application provides a processor, including an input circuit, an output circuit, and a processing circuit. The processing circuit is configured to: receive a signal by using the input circuit, and transmit a signal by using the output circuit, to enable the processor to perform the method according to any one of the possible implementations of the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a fifth aspect, a processing device is provided, including a processor and a memory. The processor is configured to: read instructions stored in the memory, receive a signal by using a transceiver, and transmit a signal by using a transmitter, to perform the method according to any one of the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the fifth aspect may be one or more chips. The processor in the processing device may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a sixth aspect, a computer-readable storage medium is provided. The computer-readable storage medium stores program code to be executed by a device, and the program code is for performing the method according to any one of the possible implementations of the first aspect.

According to a seventh aspect, a computer program product including instructions is provided. When the computer program product is run on a computer, the computer is caused to perform the method according to any one of the possible implementations of the first aspect.

According to an eighth aspect, a chip system is provided, and includes a processor, configured to: invoke a computer program from a memory and run the computer program, so that a device on which the chip system is installed performs the method according to any one of the implementations of the first aspect.

## BRIEF DESCRIPTION OF DRAWINGS

FIG. 1 is a block diagram of a structure of an electronic device 100 according to an embodiment of this application;
FIG. 2 is a diagram of a software architecture of an electronic device 100 applicable to an embodiment of this application;

FIG. 3 is a block diagram of a structure of a handwritten character beautification system 300 according to an embodiment of this application;

FIG. 4 is a diagram of segmenting handwritten characters according to an embodiment of this application;

FIG. 5 is a schematic flowchart of a handwritten character beautification method 500 according to an embodiment of this application;

FIG. 6 is a block diagram of a handwritten character beautification method according to an embodiment of this application;

FIG. 7 is a diagram of beautification effects of beautified characters at different first levels according to an embodiment of this application;

FIG. 8 is a block diagram of another handwritten character beautification method according to an embodiment of this application;

FIG. 9 is a diagram of another beautification effects of beautified characters at different first levels according to an embodiment of this application;

FIG. 10 is a block diagram of another handwritten character beautification method according to an embodiment of this application;

FIG. 11 is a diagram of another beautification effects of beautified characters at different first levels according to an embodiment of this application;

FIG. 12 is a diagram of collapse of a generated beautified character according to an embodiment of this application;

FIG. 13 is a block diagram of another handwritten character beautification method according to an embodiment of this application;

FIG. 14 is a diagram of a beautification effect of a beautified character after stroke information of a standard character is introduced according to an embodiment of this application;

FIG. 15A and FIG. 15B are a block diagram of beautified character training model according to an embodiment of this application;

FIG. 16 is another block diagram of beautified character training model according to an embodiment of this application;

FIG. 17 is a schematic flowchart of calculating a stroke contour width of a beautified character and smoothing the stroke contour width according to an embodiment of this application;

FIG. 18 is a diagram of an S curve according to an embodiment of this application;

FIG. 19 is a diagram of performing interpolation on trajectory points of a beautified character according to an embodiment of this application;

FIG. 20 is a diagram of a beautification effect obtained after a beautified character is rendered according to an embodiment of this application;

FIG. 21 is a diagram of determining a center of gravity of a handwritten character according to an embodiment of this application;

FIG. 22 is a diagram of determining distances from a key point of a handwritten character to four sides according to an embodiment of this application;

FIG. 23 is a diagram of fitting a single beautified character to a corresponding handwritten character according to an embodiment of this application;

FIG. 24 is a diagram of fitting a plurality of beautified characters to a plurality of corresponding handwritten characters according to an embodiment of this application;

FIG. 25 is a diagram of line-aligning a plurality of beautified characters according to an embodiment of this application;

FIG. 26 is a diagram of adjusting a spacing between a plurality of beautified characters in a line according to an embodiment of this application;

FIG. 27 is a diagram of aligning a plurality of lines of beautified characters according to an embodiment of this application;

FIG. 28 is a diagram of aligning headings of beautified characters according to an embodiment of this application;

FIG. 29 is a diagram of performing word segmentation and paragraph segmentation on beautified characters according to an embodiment of this application;

FIG. 30 is a diagram of a character box of a target font according to an embodiment of this application;

FIG. 31 is a diagram of each parameter of a character box of a target font according to an embodiment of this application;

FIG. 32 is a diagram of a beautification effect of beautified characters according to an embodiment of this application;

FIG. 33 is a diagram of beautifying a handwritten character in a user interface according to an embodiment of this application;

FIG. 34 is a block diagram of an electronic device 1000 according to an embodiment of this application; and

FIG. 35 is a block diagram of an electronic device 2000 according to an embodiment of this application.

**DESCRIPTION OF EMBODIMENTS**

The following describes technical solutions of this application with reference to the accompanying drawings.

The technical solutions provided in this application may also be applied to an electronic device. The electronic device includes a terminal device that supports handwriting of a user, includes but is not limited to a screen device, for example, user equipment (user equipment, UE), a tablet, a personal computer (personal computer, PC), or an office large screen, that supports writing by using a finger or a stylus, and also includes a virtual projection device, for example, virtual reality (virtual reality, VR) or augmented reality (augmented reality, AR), that supports writing by using a hand or a handle. Alternatively, the terminal device may be a wireless terminal in industrial control (industrial control), a machine type communication (machine type communication, MTC) terminal, customer premises equipment (customer premise equipment, CPE), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

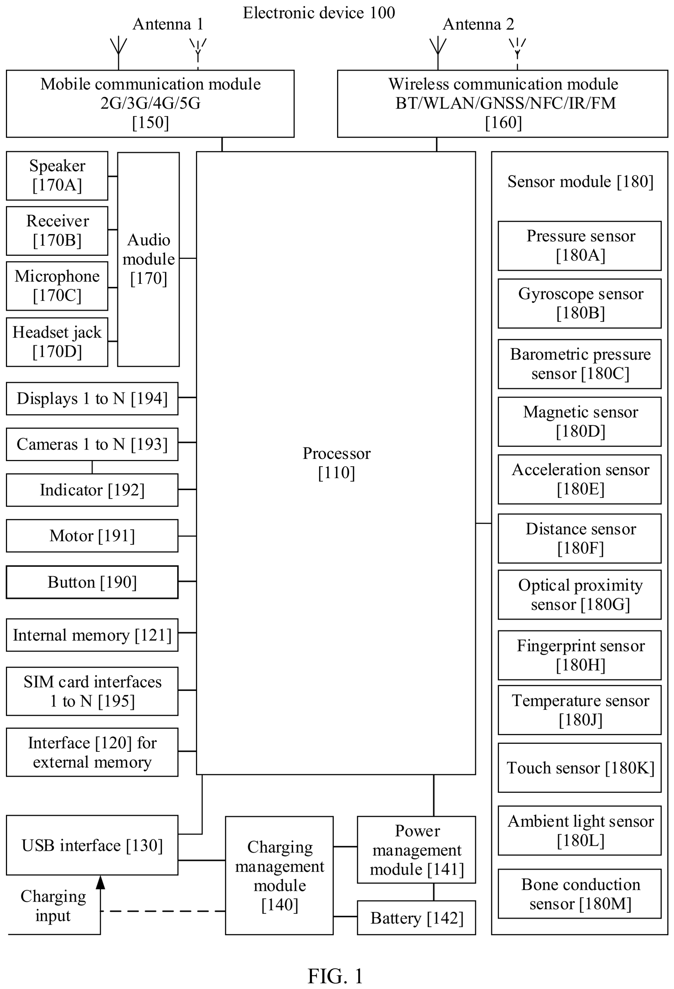

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a neural center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to exchange data between the electronic device 100 and a peripheral device, or may be configured to connect to a headset for playing audio through the headset.

The interface may be further configured to connect to another electronic device like an AR device.

It may be understood that an interface connection relationship between modules illustrated in embodiments of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrated into at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. Generally, the display 194 serves as an important entry for a user to perform human-machine interaction with the electronic device. For example, in this application, the user may write a handwritten character on the display panel. For example, the user may transmit instructions of the user to the electronic device 100 by using the display.

The electronic device 100 may implement an image shooting function through the ISP, the camera 193, the video codec, the GPU, the display 194, the application processor, and the like.

The ISP may be configured to process data fed back by the camera 193. For example, during image shooting, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by drawing on a structure of a biological neural network, for example, by drawing on a transfer mode between human brain neurons, and may further continuously perform self-learning. Applications such as intelligent cognition of the electronic device 100, for example, image recognition, facial recognition, speech recognition, and text understanding, can be implemented by using the NPU.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some of functional modules of the audio module 170 are disposed in the processor 110.

The button 190 includes a power button, a volume button, and the like. The button 190 may be a mechanical button, or may be a touch button. The electronic device 100 may receive a button input, and generate a button signal input related to a user setting and function control of the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

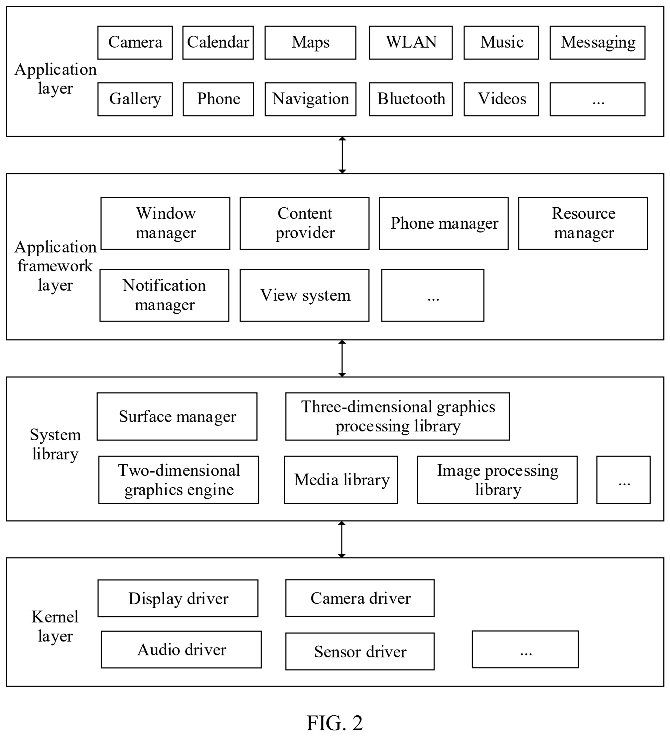

FIG. 2 is a block diagram of a software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes a visual control, for example, a control for displaying a text or a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: One part is a performance function that needs to be invoked by the Java language, and the other part is an Android core library.

The application layer and the application framework layer run in the virtual machine. The virtual machine executes Java files of the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (media library), a three-dimensional graphics processing library (for example, OpenGL ES), and a two-dimensional graphics engine (for example, SGL).

The surface manager is configured to: manage a display subsystem and provide fusion of two-dimensional and three-dimensional layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

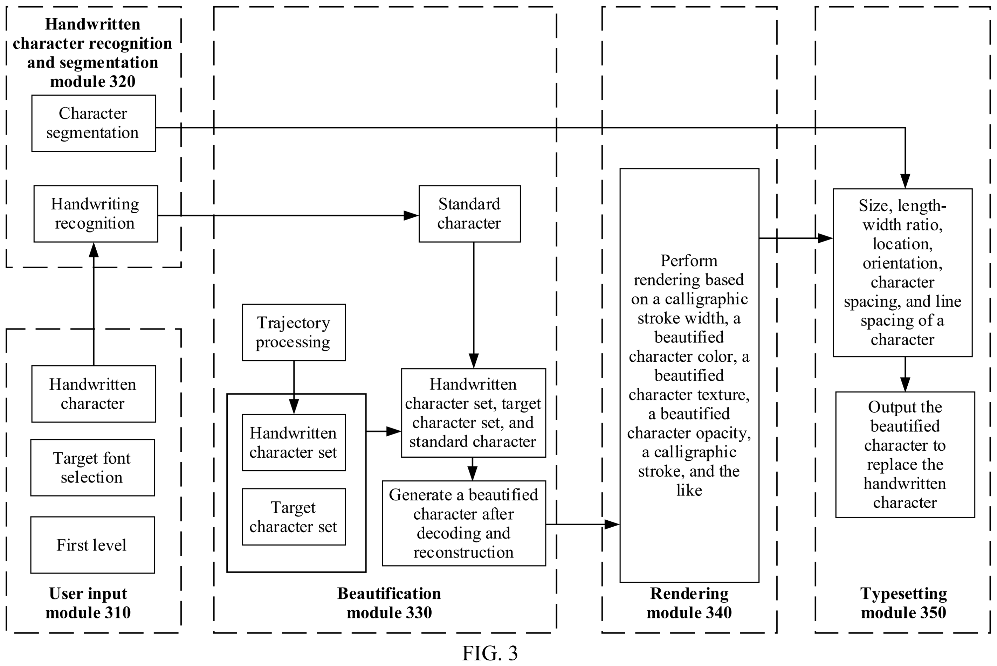

FIG. 3 is a block diagram of a structure of a handwritten character beautification system 300 according to an embodiment of this application. For example, the system may be applied to an electronic device. As shown in FIG. 3, the system includes a user input module 310, a handwritten character recognition and segmentation module 320, a beautification module 330, a brush rendering module 340, and a typesetting module 350. The following first describes main functions of the modules.

1. User input module 310

In this application, the user input module 310 (for example, which may be a handwriting area) usually includes the following functions: (1) being used by a user to write a handwritten character; (2) being used by the user to select a target font and a first level; and (3) being used by the user to enable ("enable" may also be understood as "turn on") a handwritten character beautification function. A "target font style" may also be understood as a handwritten character beautification direction expected by the user. The user may select different target fonts based on personal preferences and application scenarios. It should be understood that in this application, a plurality of fonts may be preset in a terminal device for the user to select. The "first level" may be understood as a handwritten character beautification degree expected by the user. If the user expects to retain a personal style of the handwritten character to a greater extent, the user may select a lower first level. On the contrary, if the user expects that the handwritten character of the user is as close as possible to the target font, the user may select a higher first level.

2. Handwritten character recognition and segmentation module 320

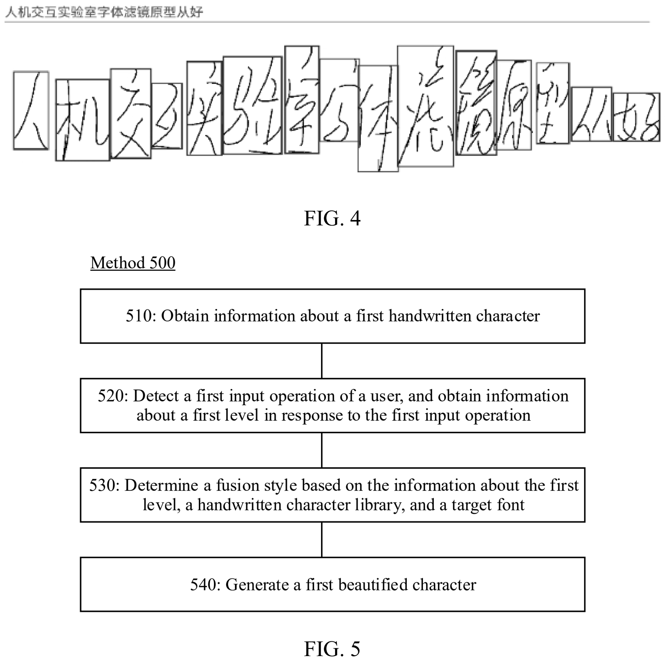

After the user enables the handwritten character beautification function, the handwritten character recognition and segmentation module 320 recognizes and segments a part of text that needs to be beautified. As shown in FIG. 4, the handwritten character recognition and segmentation module 320 recognizes handwritten characters of the user and segments the handwritten characters of the user. Specifically, the handwritten character recognition and segmentation module 320 recognizes character information corresponding to the handwritten characters of the user, and establishes rectangular segmentation boxes for the handwritten characters of the user character by character. For example, for English, the handwritten character recognition and segmentation module 320 also establishes segmentation boxes word by word, and in addition, establishes a line segmentation box for single-line text.

3. Beautification module 330

The beautification module 330 may be configured to construct a handwritten character set based on the first level input by the user. The handwritten character set includes one or more handwritten characters in a handwritten character library. Then, a target character set is constructed based on a target font selected by the user. The target character set includes one or more target characters corresponding to the target font. The beautification module 330 adjusts a ratio between a quantity of the handwritten characters to a quantity of the target characters based on a value of the first level selected by the user, to obtain the handwritten character set and the target character set corresponding to the current first level. When the first level tends to a handwritten font style of the user, a proportion of the quantity of the handwritten characters in the handwritten character set is higher. When the first level tends to a target font style, a proportion of the quantity of the target characters in the target character set is higher. The beautification module 330 is further configured to extract a fusion feature corresponding to the handwritten character set and the target character set. In addition, the beautification module 330 is configured to: extract, based on a handwritten character recognition result, a standard character corresponding to a handwritten character image or a handwritten character trajectory from a standard character library, perform feature weighting on a content feature corresponding to the standard character and a fusion style by using different weighting coefficients, and generate trajectory points of a beautified character after decoding and reconstruction.

4. Rendering module 340

The rendering module 340 is configured to render brush information such as a preset calligraphic stroke width, a beautified character color, a beautified character texture, a beautified character opacity, and a calligraphic stroke on the trajectory points of the beautified character, to generate the beautified character after rendering.

5. Typesetting module 350

After the rendering module 340 generates the beautified character, the beautified character needs to replace the handwritten character, where a size and a location of the beautified character correspond to those of the handwritten character. The typesetting module 350 calculates information such as a size, a length-width ratio, a location, and an orientation of each handwritten character, and then sets same parameters for a corresponding beautified character. In addition, the typesetting module 350 further optimizes a spacing between two adjacent characters, a size, a character spacing, and a line spacing. For example, each line of characters is centrally aligned, and character spacings are adjusted to be consistent.

FIG. 5 is a schematic flowchart of a handwritten character beautification method 500 according to this application. The method may be performed by a terminal device, or the method may be performed by a chip or a chip system used in a terminal device. This is not limited. As shown in FIG. 5, the method includes the following steps.

510: Obtain information about a first handwritten character.

In this application, the "first handwritten character" is a character written by a user on an electronic whiteboard. In this application, the information about the first handwritten character includes an image corresponding to the first handwritten character and/or a trajectory corresponding to the first handwritten character. For example, the handwritten character recognition and segmentation module 320 may obtain the image or the trajectory corresponding to the first handwritten character.

520: Detect a first input operation of the user, and obtain information about a first level in response to the first input operation.

In this application, the first level is determined based on a first instruction input by the user, and a target font is one of fonts preset in a target font library of an electronic device.

In this application, the "information about the first level" may indicate the first level, or may be understood as that the first level may be determined based on the information about the first level. In this application, the "first level" may be specified by the user. For example, the first level may be set to three levels: "low", "medium", and "high", or "weak", "medium", and "strong", or the like. The user may input a required first level in an interface of the terminal device.

In this application, different first levels may be used to determine a ratio between a handwritten font style and a target font style in a fusion style. A higher first level indicates a higher proportion of a target font style in a fusion style of a generated beautified character, and a lower first level indicates a higher proportion of a handwritten font style in the fusion style of the generated beautified character. For example, if the first level selected by the user is "low", it indicates that the generated beautified character is more like the handwritten character of the user; or if the first level selected by the user is "high", it indicates that the generated beautified character is more like the target font selected by the user. Specifically, in a possible implementation, the first level affects a quantity of handwritten characters and a quantity of target characters, and in another possible implementation, the first level affects a ratio between a first coefficient corresponding to the handwritten font style and a second coefficient corresponding to the target font style.

For example, the user input module 310 may receive the first input operation from the user. In this application, the first input operation may be understood as, for example, the first instruction input by the user. The first instruction indicates the information about the first level.

530: Determine a fusion style based on the information about the first level, a handwritten character library, and the target font.

In this application, the handwritten character library includes a character written by the user on a handwriting area of the electronic device and stored in the electronic device.

In this application, the target font library of the electronic device may include a plurality of fonts, and the user may select one target font based on a requirement. In this application, a plurality of different fonts may be preset in the electronic device. For example, the plurality of different fonts may include KaiTi, LiSu, SimSun, and the like. In some scenarios, if the user does not select the target font, the electronic device may use a specific font in the target font library as the target font by default. A manner of determining the target font is not limited in this application.

Optionally, the user may first determine the target font. Specifically, in a possible implementation, a font library of the terminal device includes at least two different fonts. The method further includes: receiving a second instruction from the user, where the second instruction indicates the target font, and the target font is one of the at least two different fonts; and determining the target font according to the second instruction. For example, it is assumed that in this application, there are three fonts: a font #1, a font #2, and a font #3. Different fonts represent different target font styles. Alternatively, it may be understood as that the user input module 310 may determine the target font according to the second instruction of the user.

Optionally, if the user does not select the target font in advance, the terminal device may use a default font as the target font. For example, the terminal device may set a font #A as the default target font.

In this application, the fusion style indicates a style obtained after the target font and a handwritten font corresponding to the character included in the handwritten character library are fused.

In a possible implementation, a third instruction is received, where the third instruction indicates a second handwritten character, the second handwritten character is the character written by the user on the handwriting area of the electronic device, and the second handwritten character is used to generate the handwritten character library; and the handwritten character library is generated according to the third instruction, where the handwritten character library includes one or more second handwritten characters.

In this application, the electronic device may obtain the handwritten character library of the user by collecting a handwritten character previously written by the user. Alternatively, the electronic device may obtain the handwritten character library of the user by collecting a handwritten character currently written by the user. For example, the "second handwritten characters" are some characters circled by the user in a segment of text previously written by the user, and these circled characters form the handwritten character library. For example, the "second handwritten characters" may be some characters circled by the user in the first handwritten characters currently written by the user, to form the handwritten character library. For example, there may be a large quantity of first handwritten characters. In this case, the user may circle some characters in the first handwritten characters as the second handwritten characters, to form the handwritten character library. For example, as long as the user writes a character on the handwriting area of the electronic device, the handwritten character may be automatically added to the handwritten character library. It may also be understood as that the second handwritten characters in the handwritten character library in this application may come from the first handwritten characters, or may come from the characters previously written by the user, or the like. This is not limited.

In a possible implementation, the method further includes: receiving a fourth instruction, where the fourth instruction indicates to update the second handwritten character in the handwritten character library; and generating an updated handwritten character library according to the fourth instruction, where the updated handwritten character library includes one or more updated second handwritten characters.

In this application, the handwritten character in the handwritten character library may also be updated. "Update" herein may be understood as replacing the handwritten character in the handwritten character library, or may be understood as adding a handwritten character to the handwritten character library. For example, subsequently, the user may write a segment of text again on the handwriting area of the electronic device, and circle some handwritten characters to replace the handwritten character in the handwritten character library.

In a possible implementation, determining the fusion style based on the information about the first level, the handwritten character library, and the target font includes: determining, based on the information about the first level, a first quantity of the second handwritten characters (which may also be understood as a "handwritten character set") and a second quantity of target characters (which may also be understood as a "target character set") corresponding to the target font, where the first quantity and the second quantity are determined based on the information about the first level; and determining the fusion style based on the first quantity of the second handwritten characters and the second quantity of the target characters corresponding to the target font.

In other words, in this application, the first quantity is a quantity of handwritten characters, and the second quantity is a quantity of target characters.

In a possible implementation, in this application, the beautification module 330 may directly determine the quantity of handwritten characters and the quantity of target characters based on different levels determined by the user. For example, if the first level selected by the user is "low", the beautification module 330 may directly determine that the quantity of handwritten characters is 7 and the quantity of target characters is 3. For example, seven handwritten characters may be randomly selected from the handwritten character library, and three target characters corresponding to the target font may be randomly selected from the target font library. For example, if the first level selected by the user is "medium", the beautification module 330 may directly determine that the quantity of handwritten characters is 5 and the quantity of target characters is 5. For example, if the first level selected by the user is "high", the beautification module 330 may directly determine that the quantity of handwritten characters is 3 and the quantity of target characters is 7.

In another possible implementation, the beautification module 130 may determine a first ratio based on the first level determined by the user, where the first ratio is a ratio between the second quantity and the first quantity; and determine the quantity of handwritten characters and the quantity of target characters based on the first ratio. For example, if the first level selected by the user is "low", the beautification module 330 may determine that a ratio between the quantity of target characters and the quantity of handwritten characters is 3:7 (quantity of handwritten characters:quantity of target characters), and further determine that the quantity of handwritten characters is 7 and the quantity of target characters is 3. For example, if the first level selected by the user is "medium", the beautification module 330 may determine that a ratio between the quantity of target characters and the quantity of handwritten characters is 5:5 (quantity of handwritten characters:quantity of target characters), and further determine that the quantity of handwritten characters is 5 and the quantity of target characters is 5. For example, if the first level selected by the user is "high", the beautification module 130 may determine that a ratio between the quantity of target characters and the quantity of handwritten characters is 7:3 (quantity of handwritten characters:quantity of target characters), and further determine that the quantity of handwritten characters is 3 and the quantity of target characters is 7.

In an example, after determining the target font, the beautification module 330 may determine the quantity of target characters based on the first level and randomly determine, from the target font library, the second quantity of target characters corresponding to the target font; and the beautification module 330 may determine the quantity of handwritten characters based on the first level and randomly determine the first quantity of handwritten characters from the handwritten character library. For example, if the first level selected by the user is "low", the beautification module 330 may determine that seven handwritten characters and three target characters are included. For example, if the first level selected by the user is "medium", the beautification module 330 may determine that five handwritten characters and five target characters are included. For example, if the first level selected by the user is "high", the beautification module 330 may determine that three handwritten characters and seven target characters are included.

540: Generate a first beautified character.

In this application, the first beautified character is the first handwritten character beautified based on the information about the first handwritten character and the fusion style.

In a possible implementation, a standard character corresponding to the first handwritten character is determined based on the information about the first handwritten character, where the standard character is a character preset in a standard character library of the terminal device; and the first beautified character is generated based on the standard character and the fusion style.

In this application, the "standard character" is the character preset in the standard character library of the terminal device. In this application, the "standard character" may be understood as a well-structured character with a correct stroke order. The standard character may be a character without any font, or the standard character may be a character with a font, which is not limited.

For example, the handwritten character recognition and segmentation module 320 may recognize a specific character written by the user on a tablet. For example, it is assumed that the user writes a character "目" (a Chinese character that means eye) on the electronic whiteboard, and then the handwritten character recognition and segmentation module 320 may recognize that the character is "目" instead of "日" (a Chinese character that means sun). The beautification module 330 may extract the standard character from the character library of the terminal device based on a recognition result.

In a possible implementation, a content feature corresponding to the standard character is extracted, where the content feature is used to determine the standard character; and the first beautified character is generated based on the content feature and the fusion style.

In this application, the "content feature" may indicate, for example, information about a stroke structure of the standard character and/or semantic information of the standard character. For example, a specific standard character may be determined based on the content feature. The "information about the stroke structure of the standard character" may include, for example, at least one of the following: a character shape structure and a stroke layout of the standard character. The "semantic information of the standard character" may be understood as that a specific standard character may be determined.

In this application, generating the first beautified character may also be understood as generating trajectory points corresponding to the first beautified character.

The following specifically describes several beautified character generation manners provided in this application. For ease of description, in the following descriptions, the "handwritten character set" represents the first quantity of the second handwritten characters, and the "target character set" represents the second quantity of the target characters.

Manner 1

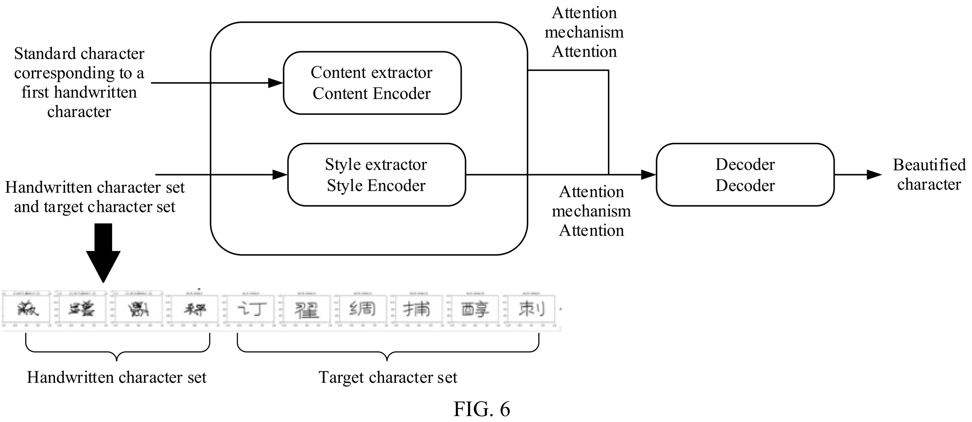

FIG. 6 is a block diagram of a beautified character generation manner according to this application. As shown in FIG. 6, "Content Encoder" is a content extractor, and is configured to extract a content feature of a standard character; "Style Encoder" is a style extractor, and is configured to extract a fusion style of the handwritten character set and the target character set; "Attention" is an attention mechanism, and is configured to perform feature weighting, where it may also be understood as that feature weighting is performed on the content feature and the fusion style by using different weighting coefficients; "Decoder" is a decoder, and is configured to perform feature fusion and content reconstruction, to generate a beautified character.

It may also be understood as that the foregoing "content extractor", "style extractor", and "attention mechanism" may obtain some digital information for indicating the beautified character, and the "decoder" may be configured to decode the digital information, to obtain the beautified character that can be used for display. For example, the "decoder" may perform feature fusion and font reconstruction based on the finally obtained fusion style, the content feature of the standard character, and respective corresponding weighting coefficients, to obtain the beautified character at the current first level. A solution of Manner 1 may be understood as that font styles of all characters included in the input handwritten character set and target character set are extracted at the same time, to obtain the fusion style corresponding to the handwritten character set and the target character set.

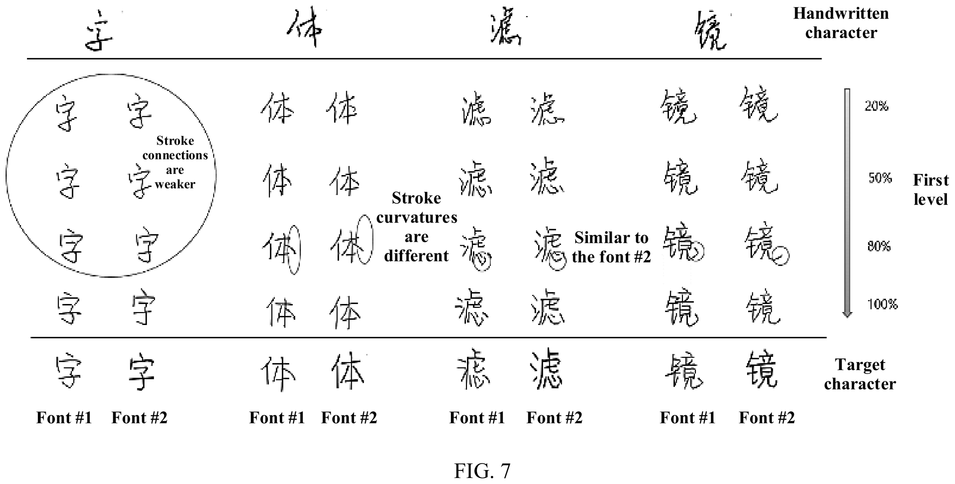

For example, it is assumed that the input first level is "high", and the beautification module 330 determines that a quantity of target characters in the target character set is 6 and a quantity of handwritten characters in the handwritten character set is 4. FIG. 7 is a diagram of beautified characters that correspond to different first levels and that are obtained by beautifying handwritten characters in Manner 1 according to this application. As shown in FIG. 7, when the first level is low, a fusion style of the beautified character is close to the handwritten character. As the first level increases, the fusion style of the beautified character gradually approaches the target font style. It can be learned from FIG. 7 that as the first level increases, a stoke connection of the handwritten character becomes weak, and a finally presented beautified character is neater. In addition, it can be learned that at a same first level, a font #1 and a font #2 have a same character form but different stroke curvatures. Different fonts finally correspond to different beautified characters. If a selected target font is the font #2, a style of a finally generated beautified character is similar to a style of the font #2.

For example, in a specific implementation, a "matrix" operation may be used. For example, a size of a matrix corresponding to each character in the handwritten character set and the target character set that are input by the beautification module 130 is (1, 110, 3), where "1" indicates a current quantity of characters (which may also be understood as a first dimension of the matrix), "110" indicates a sequence length of the character, and "3" indicates a current dimension of the character (for example, including an X-axis dimension, a Y-axis dimension, and a point attribute of the character).

Then, all characters in the handwritten character set and the target character set are spliced based on the first dimension. It is assumed that there are a total of 10 characters in the handwritten character set and the target character set, and four handwritten characters and six beautified characters are included. After splicing, a size of a matrix corresponding to the handwritten character set and the target character set is (10, 110, 3), where "10" indicates that the handwritten character set and the target character set include 10 characters. Then, dimension expansion may be performed on the matrix. For example, one dimension may be expanded for the matrix corresponding to the handwritten character set and the target character set. For example, if one character needs to be inferred, dimension expansion is performed on the matrix to obtain (1, 10, 110, 3), where "1" indicates that one character needs to be inferred currently, "10" indicates a current quantity of characters in the handwritten character set and the target character set (which may also be understood as a second dimension of the matrix), "110" indicates a sequence length of each character in the handwritten character set and the target character set, and "3" indicates a dimension of each character in the handwritten character set and the target character set. Finally, the handwritten character set and the target character set after dimension expansion may be reshaped. For example, the first dimension may be combined with the second dimension that is used for dimension expansion, to obtain a size of a matrix after reshaping: $(1\times10, 110, 3)$.

Manner 2

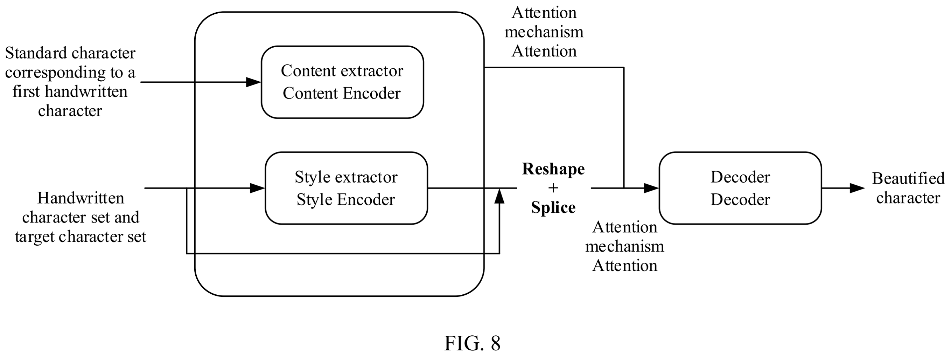

FIG. 8 is a block diagram of another beautified character generation manner according to this application. For functions of modules in FIG. 8, refer to the descriptions of FIG. 6 in Manner 1. Details are not described again. In the technical solution of Manner 1, a style may be collectively extracted from the input handwritten character set and target character set to obtain a fusion style. However, in Manner 2, a font style of each handwritten character or target character in the input handwritten character set and target character set may be extracted character by character, and then reshape (Reshape) and splicing are performed on the extract font style corresponding to each character, to obtain the fusion style. Then, the "attention mechanism" is used to separately perform feature weighting on the content feature and the fusion style by using different weighting coefficients, and then the decoder is used to perform feature fusion and content reconstruction, to generate a beautified character.

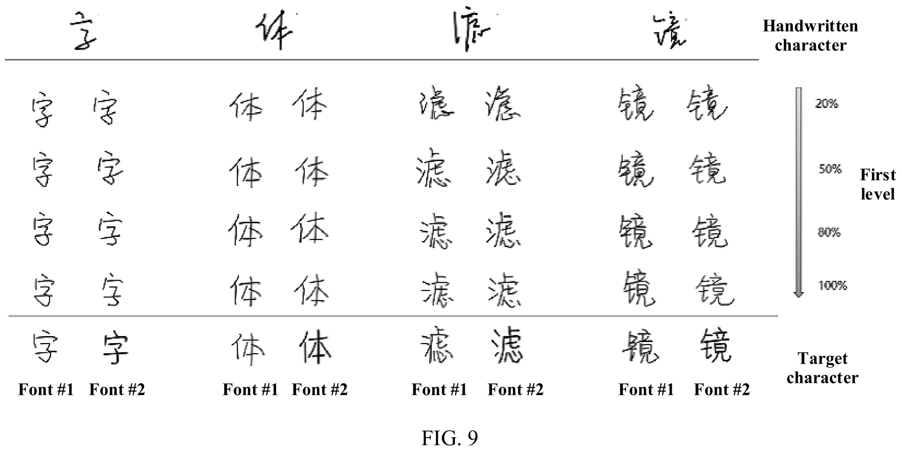

FIG. 9 is a diagram of beautified characters that correspond to different first levels and that are obtained by beautifying handwritten characters in Manner 2 according to this application. As shown in FIG. 9, when the first level is low, a fusion style of the beautified character is close to the handwritten font style. As the first level increases, the fusion style of the beautified character gradually approaches the target font style.

For example, in a specific implementation, a "matrix" operation may be used. For example, a size of a matrix corresponding to each character in the handwritten character set and the target character set in the beautification module 330 is (1, 110, 3), where "1" indicates a current quantity of characters (which may also be understood as a first dimension of the matrix), "110" indicates a sequence length of the character, and "3" indicates a current dimension of the character (for example, including an X-axis dimension, a Y-axis dimension, and a point attribute of the character). It should be noted that, in Manner 2, each character in the handwritten character set and the target character set needs to be input into a model character by character. It is assumed that a quantity of characters that need to be inferred is 1, and then a size of a matrix of each character is $(1\times1, 110, 3)$, where "$1\times1$" indicates "a quantity of inferred characters$\times$a quantity of beautified characters in the handwritten character set and the target character set", "110" indicates a current sequence length of the character, and "3" indicates a dimension of the character. A feature matrix whose size is $(1\times1, 110, \text{dim})$ is obtained, where "dim" indicates a dimension of a feature layer (generally, dimension expansion is performed on the matrix, and a value of "dim" is greater than 3). Then, reshape is performed on the matrix. The matrix may be split based on the first dimension. A size of a split matrix is (1, 1, 110, dim). Finally, the current matrix is spliced based on the second dimension. If the handwritten character set and the target character set include a total of 10 characters, a size of a matrix corresponding to the handwritten character set and the target character set after the splicing is (1, 10, 110, dim).

Manner 3

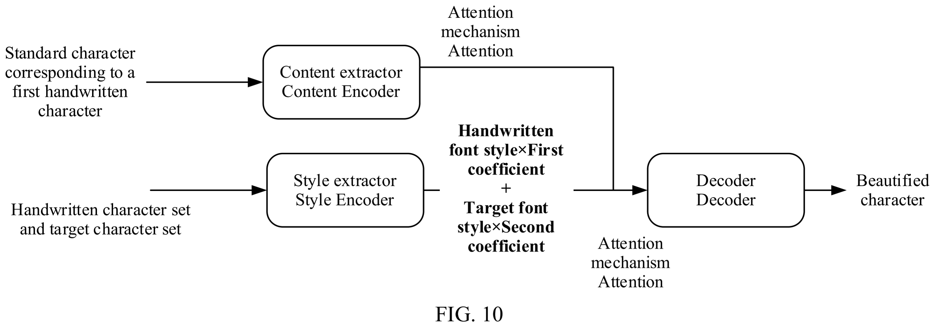

FIG. 10 is a block diagram of another beautified character generation manner according to this application. For functions of modules in FIG. 10, refer to the descriptions of FIG. 6 in Manner 1. Details are not described again. In the technical solutions of Manner 1 and Manner 2, the beautification module 330 may determine, based on the first level, the quantity of handwritten characters in the handwritten character set and the quantity of target characters in the target character set. However, in Manner 3, the quantity of handwritten characters in the input handwritten character set and the quantity of target characters in the target character set do not need to be limited. However, an extracted handwritten font style corresponding to the handwritten characters and a target font style corresponding to the target characters need to be weighted based on specific weighting coefficients, to obtain a fusion style. In other words, in Manner 3, the quantity of handwritten characters in the input handwritten character set and the quantity of target characters in the target character set may not be limited. The beautification module 330 may extract the handwritten font style of the handwritten character and the target font style of the target character. Then, the beautification module 330 may determine, based on the first level, a first coefficient corresponding to the handwritten font style of the handwritten character and a second coefficient corresponding to the target font style, and then determine the fusion style based on the respective weighting coefficients, the handwritten font style, and the target font style. The second coefficient indicates a proportion of the target font style in the fusion style, and the first coefficient indicates a proportion of the handwritten font style in the fusion style.

In a possible implementation, the beautification module 330 may determine a second ratio based on the first level, where the second ratio is a ratio between the second coefficient and the first coefficient.

For example, if the first level selected by the user is "low", the beautification module 330 may determine that a weighting coefficient of the handwritten font style of the handwritten character is 0.7 (an example of the first coefficient), and a weighting coefficient of the target font style of the target character is 0.3 (an example of the second coefficient). The handwritten font style of the handwritten character and the target font style of the target character are fused based on the respective weighting coefficients, to obtain the fusion style. For example, if the first level selected by the user is "medium", the beautification module 330 may determine that a weighting coefficient of the handwritten font style of the handwritten character is 0.5, and a weighting coefficient of the target font style of the target character is 0.5. The handwritten font style of the handwritten character and the target font style of the target character are fused based on the respective weighting coefficients, to obtain the fusion style. For example, if the first level selected by the user is "high", the beautification module 330 may determine that a weighting coefficient of the handwritten font style of the handwritten character is 0.3, and a weighting coefficient of the target font style of the target character is 0.7. The handwritten font style of the handwritten character and the target font style of the target character are fused based on the respective weighting coefficients, to obtain the fusion style.

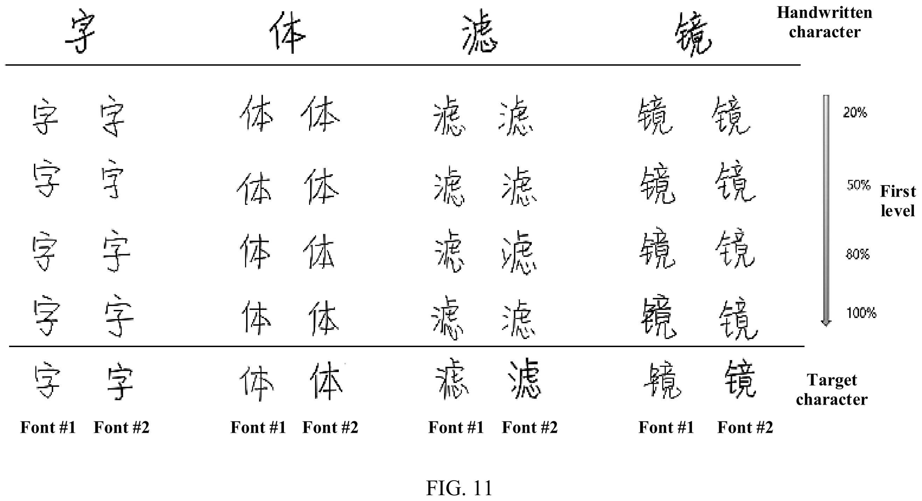

FIG. 11 is a diagram of beautified characters that correspond to different first levels and that are obtained by beautifying handwritten characters in Manner 3 according to this application. As shown in FIG. 11, when the first level is low, a fusion style of the beautified character is close to the handwritten font style. As the first level increases, the fusion style of the beautified character gradually approaches the target font style.

It should be understood that the technical solutions provided in Manner 1 to Manner 3 may also be understood as that there is a model for beautifying a handwritten character. As shown in FIG. 6, FIG. 8, and FIG. 10, an input of the model is the standard character, the handwritten character set, and the target character set, and an output of the model is the beautified character.

In this application, in Manner 1 to Manner 3, multi-level handwritten character beautification effects may be implemented based on the first levels selected by the user. In addition, in the handwritten character beautification effect in this application, a personal style of the handwritten character of the user may be retained. The user may select different first levels to implement whether a finally presented beautified character trends to the handwritten character style of the user or the target font style.

Manner 4

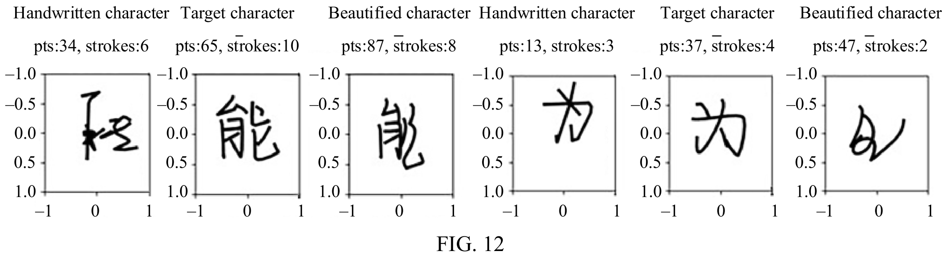

Further, in some scenarios, a structure of a generated beautified character does not match a standard structure corresponding to the beautified character. It may also be understood as that the finally generated beautified character may be inconsistent with an original handwritten character, that is, the generated beautified character is not the handwritten character of the user on a tablet. In some scenarios, an error occurs in the generated beautified character. FIG. 12 is an effect diagram of collapse of a generated beautified character. As shown in FIG. 12, in a left example, a generated beautified character is not standard, and some strokes are missing; and in a right example, a generated beautified character cannot be recognized. In view of this, this application proposes that stroke information of the standard character may be considered when the beautified character is generated, so that the generated beautified character is accurate and is consistent with the character handwritten by the user on the electronic whiteboard, to reduce an error rate of the generated beautified character. The following describes a technical solution of beautifying the handwritten character after the stroke information of the standard character is added.

In this technical solution, structure information of the standard character needs to be determined, so that the generated beautified character can match a standard structure of the character. For example, the stroke information of the standard character may be obtained, where the stroke information of the standard character may include a stroke order and a stroke type of the standard character, and then the beautified character is generated based on the standard character, the handwritten character set, the target character set, and the stroke information of the standard character. In a possible implementation, the first beautified character may be generated based on the content feature and the fusion style that correspond to the standard character, and the stroke information of the standard character.

In an example, strokes of the standard character may be encoded based on a type. For example, strokes of a Chinese character may be generally classified into 32 types, and the 32 types of strokes may be separately numbered, where each number may uniquely represent one type of stroke. Table 1 shows possible stroke code. For example, when an image of a handwritten character is recognized, it may be determined that the handwritten character corresponds to a standard character, and structure information of the standard character is determined according to Table 1. It is assumed that the handwritten character written by the user on the electronic whiteboard is " 人 " (a Chinese character that means person), and then it may be obtained, according to Table 1, that stroke information of a standard character corresponding to the character is (04, 05). This encoding manner may also reflect the stroke order. For example, if the stroke information is (04, 05), it may also reflect that "throw (丿)" is written and then "press (㇏)" is written when the character is formed.

Table 1

| Stroke type | Dot (丶) | Horizont al (一) | Vertical (丨) | Throw (丿) | Press (㇏) | Upward horizontal (㇀) | Horizontal-vertical (┐) | Horizontal-throw (乛, 𠃌) |
|---|---|---|---|---|---|---|---|---|
| Stroke number | 01 | 02 | 03 | 04 | 05 | 06 | 07 | 08 |
| Stroke type | Horizont al-J hook (一) | Horizont al-vertical-J hook (┐, 𠃌) | Horizont al-vertical-upward horizonta l (㇇) | Horizontal-anticlockwi se curve (乚) | Horizont al-vertical-horizonta l (㇋) | Horizont al-press-J hook (乛) | Horizontal-throw-an-ticlockwi se curve-J hook (㇌) | Horizontal-throw-clockwise curve (㇉) |
| Stroke number | 09 | 10 | 11 | 12 | 13 | 14 | 15 | 16 |
| Stroke type | Horizont al-throw-horizonta l-throw (㇍) | Horizont al-throw-horizonta l-throw-J hook (㇎) | Horizont al-vertical-horizonta l-vertical (㇊) | Vertical-up-ward hori-zontal (㇄) | Vertical-horizonta l (㇗) | Vertical-J hook (亅) | Vertical-an-ticlockwi se curve (㇖) | Vertical-an-ticlockwi se curve-J hook (㇗) |
| Stroke number | 17 | 18 | 19 | 20 | 21 | 22 | 23 | 24 |
| Stroke type | Vertical-horizonta l-throw (㇄) | Vertical-horizonta l-vertical (㇉) | Vertical-horizonta l-throw-J hook (㇆) | Throw-dot (〈) | Throw-horizonta l (㇗) | Press-J hook (ㇳ) | Clockwise curve-J hook (勹) | Flat press-J hook (㇂) |
| Stroke number | 25 | 26 | 27 | 28 | 29 | 30 | 31 | 32 |

In another example, another encoding manner may be further used. It is assumed that there are 32 stroke types in each line, "0" and "1 " may be used to indicate a specific stroke type of each stroke of a character, and the character is formed by a specific quantity of strokes, and then can be represented by using this quantity of lines. For example, a character "人" (a Chinese character that means person) is formed by two strokes, and then can be represented by using two lines. Stroke information of the character may be as follows: In a first line, only a stroke type of "throw (丿)" is indicated as "1", and the other 31 stroke types are all indicated as "0"; and in a second line, only a stroke type of "press (㇏)" is indicated as "1", and the other 31 stroke types are all indicated as "0". For another example, a character "目" (a Chinese character that means eye) is formed by five strokes, and then can be represented by using five lines. Stroke information of the character may be as follows: In a first line, only a stroke type of "vertical (丨)" is indicated as "1", and the other 31 stroke types are all indicated as "0"; in a second line, only a stroke type of "horizontal-vertical (┐)" is indicated as "1", and the other 31 stroke types are all indicated as "0"; and in a third line to a fifth line, only a stroke type of "horizontal (一)" is indicated as "1", and the other 31 stroke types are all indicated as "0".

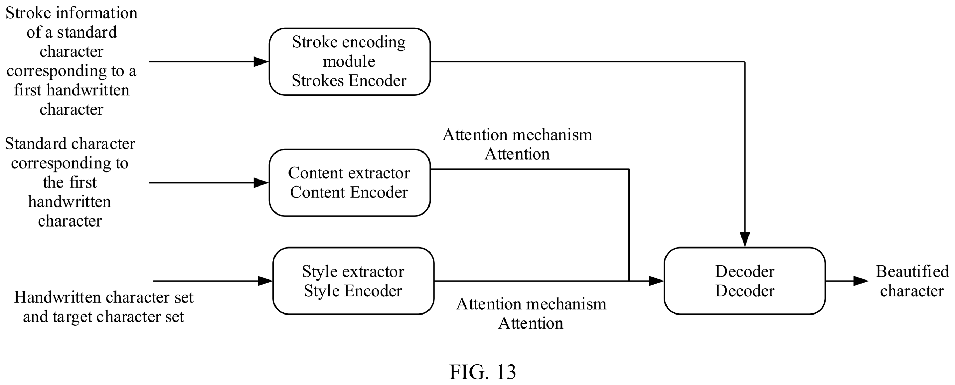

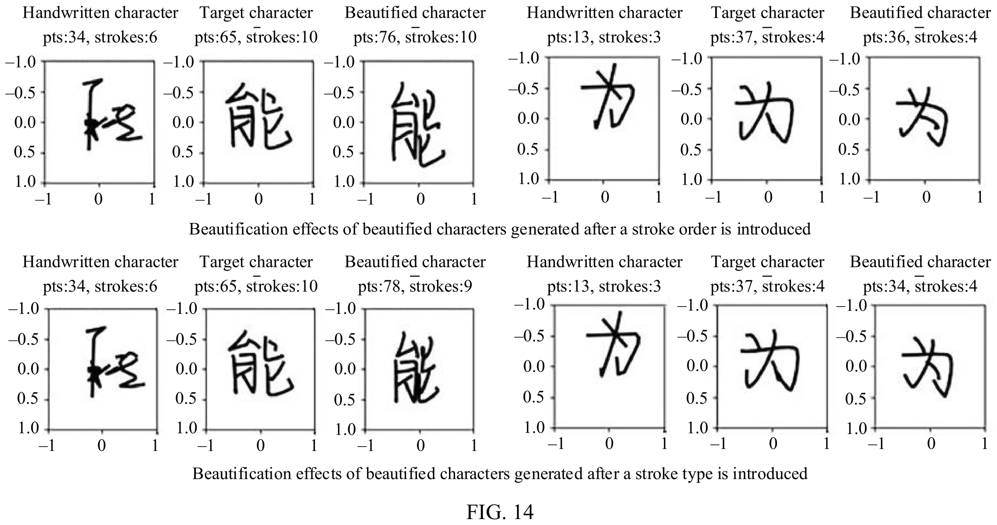

FIG. 13 is a block diagram of another beautified character generation manner according to this application. "Strokes Encoder" in FIG. 13 is a stroke encoding module. The stroke information corresponding to the standard character is input into the "decoder", so that accuracy of the generated beautified character can be improved, and a font collapse problem can be avoided. For functions of other modules in FIG. 13, refer to the descriptions of FIG. 6 in Manner 1. Details are not described again. FIG. 14 is an effect diagram of a beautified character generated by using the technical solution of Manner 4 in this application. An upper part of FIG. 14 is an effect diagram of a beautified character finally generated after a stroke order is introduced, and a lower part of FIG. 14 is an effect diagram of a beautified character finally generated after a stroke type is introduced.

It should be understood that the technical solution provided in Manner 4 may also be understood as that there is a model for beautifying a handwritten character. As shown in FIG. 11, an input of the model is the standard character, the handwritten character set, the target character set, and the stroke information of the standard character, and an output of the model is the beautified character.

In this application, based on the solution provided in Manner 4, a problem of font collapse occurring in a trajectory of generating a beautified character can be effectively alleviated, an error rate of the generated beautified character is reduced, and generation quality of the beautified character is improved.

It should be noted that, in this application, when Manner 1 to Manner 4 are used to beautify a handwritten character, the standard character input into the model may be a single standard character. In other words, in a process of beautifying the handwritten character by using the model, beautification may be separately performed on each handwritten character.

In addition, it is considered that when the first level is high, the proportion of the target font style corresponding to the target font gradually increases, and an error rate of a generated beautified character increases. This is because, in most cases, the handwritten character written by the user on the electronic whiteboard in the training dataset is usually sloppy and not neat. As a result, when the proportion of the target font is high at a high first level, an error is likely to occur when a "decoder" in the model reconstructs the character. In addition, re-collecting a neatly handwritten character incurs certain labor costs. In view of this, to expand the training dataset of the model and improve performance of the model, this application proposes that because an original output is beautified characters at different levels, an output result of an original model may be used as an input of the original model, to further train the original model and optimize performance of the original model. In this way, beautified characters output by the original model are more accurate, and generation quality of the beautified characters is higher.

It should be understood that a dataset in this application may be a public dataset, and the dataset is used to train a beautified character model. For example, the dataset may further include a training dataset and an inference dataset. The training dataset is used for model training, and the inference dataset is used for model inference. For example, the training dataset may include a standard character training dataset, a handwritten character training dataset, and a target character training dataset. For example, the inference dataset may include a standard character inference dataset, a handwritten character inference dataset, and a target character inference dataset. In this application, the training dataset and the inference dataset are not distinguished, and are collectively referred to as a training dataset.

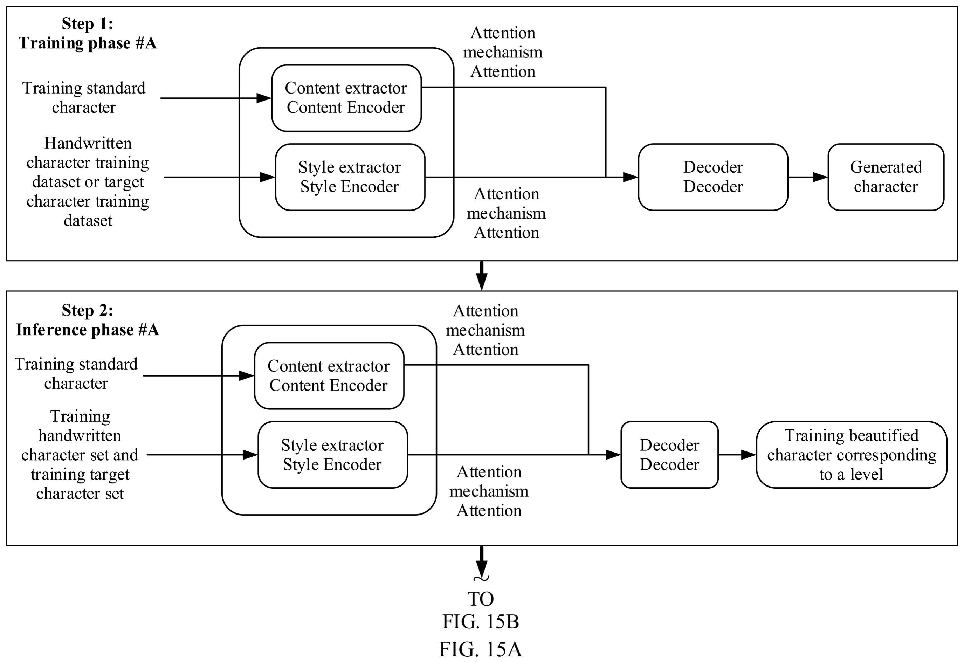

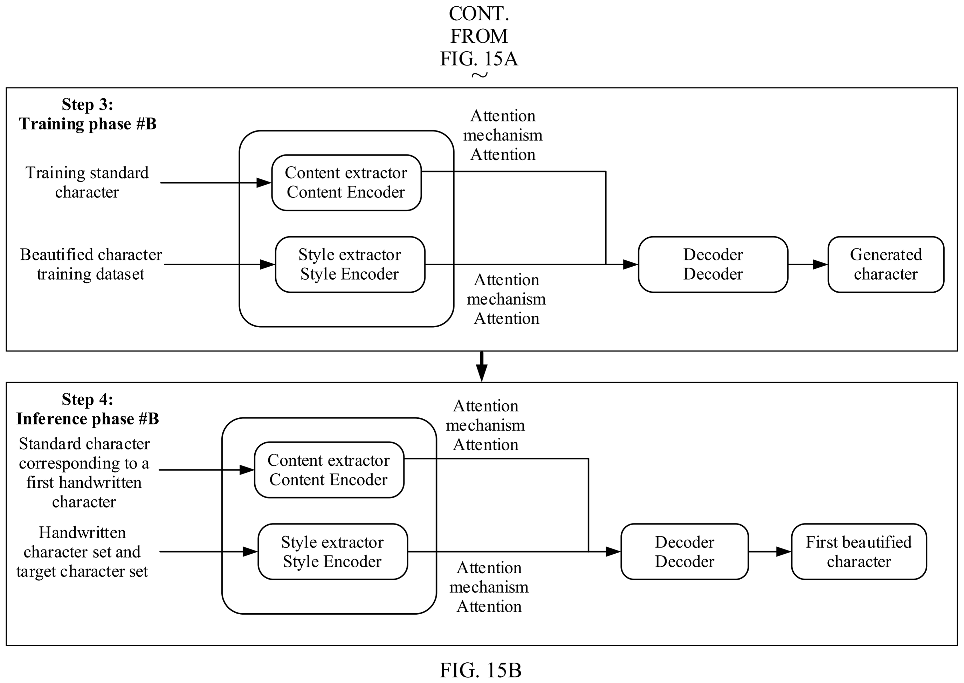

Specifically, as shown in FIG. 15A and FIG. 15B, the original model may be divided into two training phases and two inference phases. The following separately describes the training phases and inference phases of the original model.

Step 1: Training phase #A

The training phase #A may be understood as an initial training phase. During initial training, the training dataset of the original model may be obtained from a public training dataset. The standard character training dataset includes training standard characters, the handwritten character training dataset includes training handwritten characters, and the target character training dataset includes training target characters. For example, during initial training, the handwritten character training dataset may be used for training. For example, a training standard character #1 and a training handwritten character #1 may be input, and a training label is also the training handwritten character #1. For example, during initial training, the target character training dataset may alternatively be used for training. For example, a training standard character #2 and a training target character #2 may be input, and a training label is also the training target character #2. In other words, a training target of the model is that an output generated character is expected to be consistent with the input training handwritten character (that is, a style of the generated character is expected to be consistent with a style of the training handwritten character), that is, an input is expected to be an output. For example, a plurality of iterations may be performed to optimize the performance of the model. After performance of the original model reaches an expectation after initial training (or performance of the original model does not change), an inference phase #A may be performed.

Step 2: Inference phase #A

For example, in the inference phase #A, it is determined that the first level is 40%, a training standard character #11 is input, an input training handwritten character set includes a training handwritten character #11 to a training handwritten character #16, and an input training target character set includes a training target character #11 to a training target character #14. In this case, the model may output a beautified character #1 corresponding to the training standard character #11. For example, a set including a plurality of beautified characters may be obtained after a plurality of times of inference. In this application, the beautified character training dataset may be obtained by using the inference phase #A.

Step 3: Training phase #B

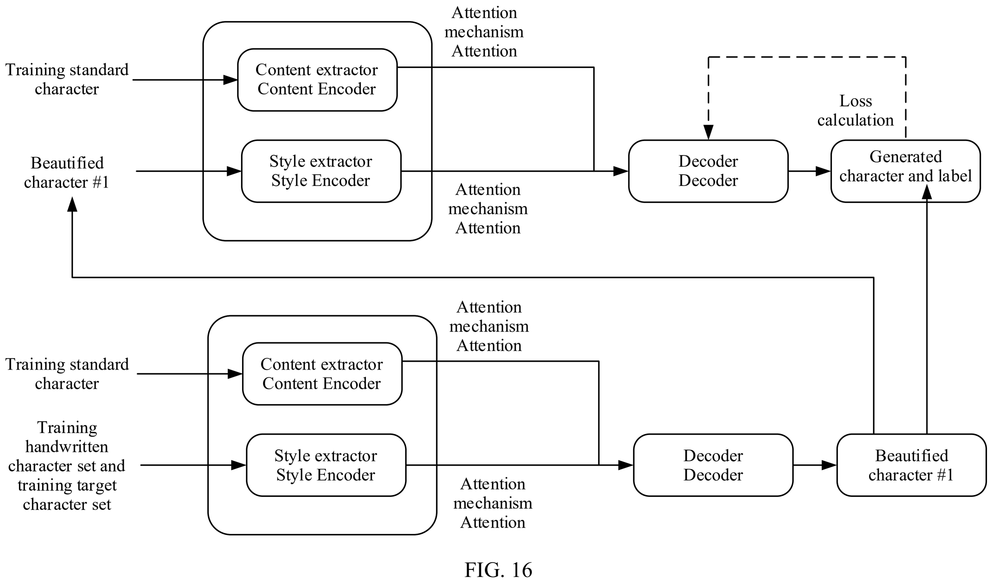

After the beautified character training dataset is obtained, the model may be further trained based on the beautified character training dataset, to optimize the performance of the model. The training process may also be understood as a fine-tuning process of the model. For a specific training process, refer to FIG. 16. It is assumed that an inference result of the original model in the inference phase #A is the beautified character #1. In this case, the beautified character #1 may be used as an input, to further train the original model. For example, a training standard character #21 and the beautified character #1 may be input to train the original model, and a training label is still the beautified character #1. Iterative training may be separately performed on the original model based on the plurality of beautified characters obtained in the inference phase #A, to adjust a parameter of the original model, thereby optimizing the performance of the model. For example, in the training phase #B, a model parameter of the "decoder" may be mainly adjusted, and there is no need to adjust a model parameter of the "content extractor" and a model parameter of the "style extractor". For example, in the training process, a model parameter in an optimized decoder may be calculated by using a loss, and training may be ended after expected performance of the model is achieved (or after the performance of the model does not change), and it is considered that training of the original model is completed.

It should be noted that, in this embodiment, parameters of the original model may be continuously optimized by using the training phases #A and the training phase #B for a plurality of times, so that the beautified character output by the original model is more accurate, and the generation quality of the beautified character is higher.

Step 4: Inference phase #B

The inference phase #B may be understood as a process in which the user uses the model. For example, a standard character corresponding to the first handwritten character of the user is determined based on a recognized image corresponding to the first handwritten character of the user, and then the handwritten character set and the target character set are determined based on the first level determined by the user. The model outputs the first beautified character corresponding to the first handwritten character based on the standard character corresponding to the input first handwritten character, the handwritten character set, and the target character set.

The technical solutions described above may be understood as specific implementations in which the beautification module 330 beautifies the handwritten character. The following starts to describe a beautified character rendering manner.

Generally, a calligraphic stroke effect of the handwritten character is obtained through calculation based on parameters such as a pressure of a stylus actuator used by the user and a speed of the stylus actuator. However, the beautified character generated by the model does not have the information. Therefore, this embodiment provides a method for calculating a calligraphic stroke width based on a dispersion degree of trajectory points of a beautified character.

According to a writing habit rule, generally, a writing speed of a stylus is high when the stylus writes a straight stroke, and a trajectory width of the beautified character is small; and the writing speed of the stylus is low when the stylus writes a bent stroke, and the trajectory width of the beautified character is large. Therefore, a calligraphic stroke width of the beautified character may be inferred based on sparsity of the trajectory points of the beautified character. For example, sparser trajectory sampling points of the beautified character or a longer spacing between connected points indicate/indicates a higher writing speed of the stylus, namely, a smaller calligraphic stroke width. On the contrary, denser trajectory sampling points of the beautified character or a shorter spacing between the connected points indicate/indicates a lower writing speed of the stylus, namely, a larger calligraphic stroke width. The following describes a main procedure.

Step 1: Calculate the calligraphic stroke width of the beautified character.

(1) Simplify a path on the trajectory points of the beautified character according to a Ramer-Douglas-Peucker (Ramer-Douglas-Peucker, RDP) algorithm. For example, sampling points are dense at a bent stroke, and sampling points are sparse at a straight stroke.

(2) Map the simplified trajectory points of the beautified character to a writing rule. To be specific, a part with dense trajectory points indicates a low writing speed, and a trajectory point width value is large; and a part with sparse trajectory points indicates a high writing speed, and a trajectory point width value is small. Distribution of sparse and dense trajectory points may be obtained based on the dispersion degree of the trajectory points, to calculate the calligraphic stroke width of the beautified character.

Step 2: Smooth the calligraphic stroke width of the beautified character.

(3) To smooth a connection between the simplified trajectory points of the beautified character, perform an interpolation on the trajectory points by using a curve smoothing method, and correspondingly, calculate a width of an interpolation point based on the trajectory point calligraphic stroke width.

(4) Perform sliding averaging on width values to implement smooth transition of the calligraphic stroke widths between strokes.

It should be understood that, in a specific implementation, step 1 and step 2 are in an "and/or" relationship. For example, only step 1 or only step 2 may be performed. For another example, step 2 may be performed after step 1 is performed.

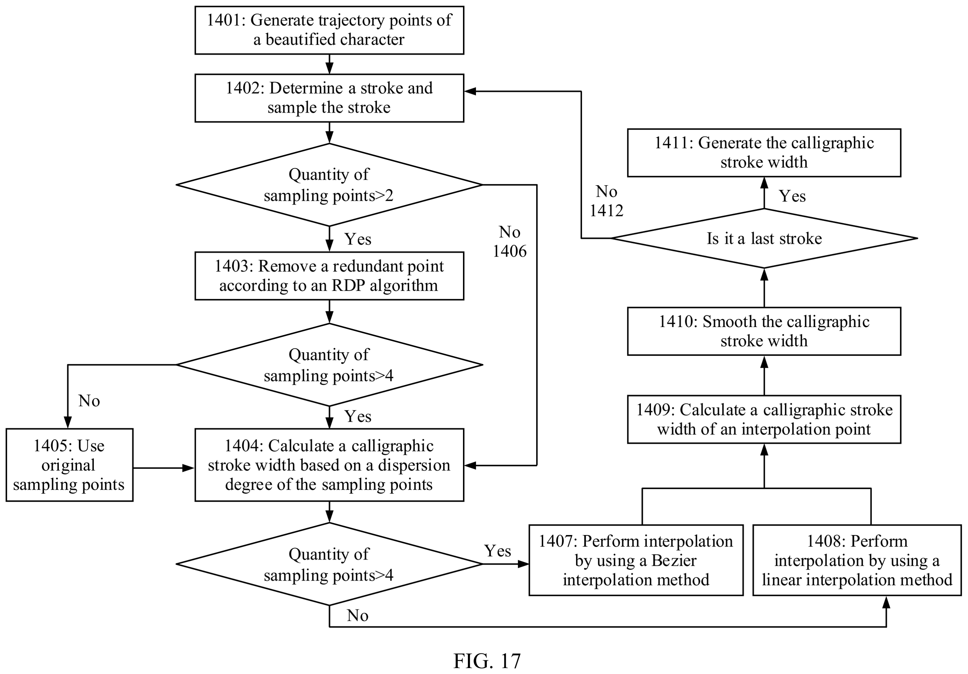

FIG. 17 is a flowchart of a method for calculating a calligraphic stroke width of a beautified character and smoothing the calligraphic stroke width. The method includes the following steps. Step 1401: Generate trajectory points of the beautified character. Step 1402: Determine a stroke and sample the stroke. Step 1403: When a quantity of sampling points is greater than 2, remove a redundant point according to an RDP algorithm. Step 1404: After the redundant point is removed, if a quantity of sampling points is still greater than 4, calculate a calligraphic stroke width based on a dispersion degree of the sampling points. Step 1405: After the redundant point is removed, if a quantity of sampling points is less than 4, continue to sample the original sampling points corresponding to the stroke, and then calculate a calligraphic stroke width based on a dispersion degree of the sampling points. Step 1406: When a quantity of sampling points is less than 2, calculate a calligraphic stroke width based on a dispersion degree of the sampling points. Step 1401 to step 1406 may be understood as a process of calculating the calligraphic stroke width of the beautified character. Step 1407 to step 1412 described below may be understood as a process of smoothing the calligraphic stroke width of the beautified character. Step 1407: If a quantity of sampling points is greater than 4, perform interpolation by using a Bezier interpolation method. Step 1408: If a quantity of sampling points is less than 4, perform interpolation by using a linear interpolation method. Step 1409: Calculate a calligraphic stroke width of an interpolation point. Step 1410: Smooth the calligraphic stroke width. Step 1411: Generate a final calligraphic stroke width when it is determined that the stroke is a last stroke. Step 1412: Continue to repeatedly perform step 1402 to step 1411 when it is determined that the stroke is not a last stroke.

The following separately describes a method A for calculating a calligraphic stroke width of a beautified character and a method B for smoothing the calligraphic stroke width.

Method A

When a quantity of sampling points of a stroke is greater than 2, a sum of distances between a current sampling point and two sampling points separately previous and next to the current sampling point is calculated. To be specific, a distance between an $i^{th}$ sampling point $P_i$ and a previous sampling point $P_{i-1}$ and a distance between $P_i$ and a next sampling point $P_{i+1}$ are separately calculated, and the two distances are added to obtain a sum. To resolve impact of a size of a character on a distance, normalization processing is performed on the sum of distances. The sum of distances is divided by a width (width) of the character, to obtain a normalized sum of distances $D_i$. When $D_i$ is large, it indicates that the current sampling point is located in a sparse area. When $D_i$ is small, it indicates that the current sampling point is located in a dense area.

Herein,

$$D_i = \frac{dis(P_{i-1}, P_i) + dis(P_i, P_{i+1})}{width}.$$

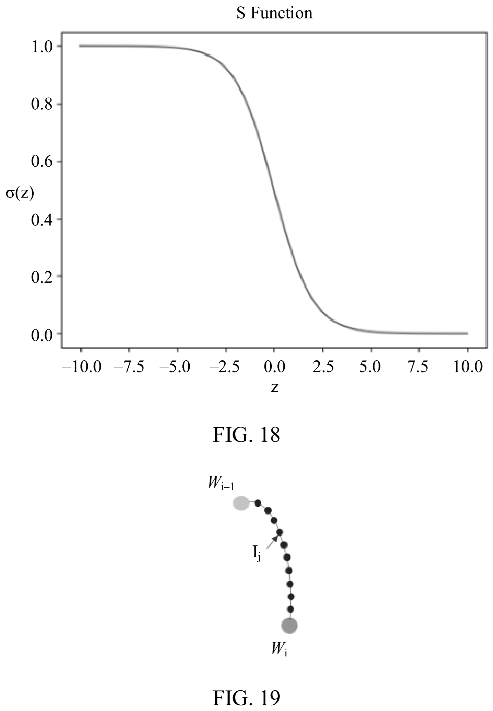

A current calligraphic stroke width $W_i$ is calculated based on the normalized sum of distances $D_i$ of the current sampling point, where *base_W* is a basic calligraphic stroke width, and $Scale_i$ is a calligraphic stroke weighting coefficient, and may be implemented based on a sigmoid curve. A function graph is shown in FIG. 18. The coefficient value $Scale_i$ is negatively correlated with the sum of distances $D_i$, and two ends converge to 1. When the sum of distances increases, the coefficient value decreases, and a calligraphic stroke width value becomes smaller. When the sum of distances is excessively large or excessively small, the coefficient converges, to help smooth transition of the calligraphic stroke width. Herein, $Scale_i = 1 / (1 + \exp(D_i))$, and $W_i = Scale_i * base\_W$. For a start point 0 and an end point N of a stroke trajectory, calligraphic stroke width values of the start point 0 and the end point N are respectively $W_0 = W_1, W_N = W_{N-1}$. When a quantity of stroke sampling points is 2, calligraphic stroke widths of the points $P_0$, $P_1$ are calculated as follows:

$$D_1 = \frac{dis(P_0, P_1) * 2}{width}$$, $W_1 = 1 / (1 + \exp(D_1)) * base\_W$, and $W_0 = W_1$, where $W_0$ and $W_1$ respectively indicate the calligraphic stroke widths of the start point $P_0$ and the end point $P_1$.

Method B

To smooth a font trajectory, interpolation may be performed on trajectory points. As shown in FIG. 19, a width of an interpolation point is calculated by using a linear weighted summation idea. It is assumed that calligraphic stroke width values of an i - 1 $^{th}$ trajectory point and an i $^{th}$ trajectory point are respectively $W_{i-1}$ and $W_i$, a quantity of interpolation points between the two points is M, and a formula for calculating a width value $W_{Ij}$ of a j $^{th}$ interpolation point $I_j$ is $W_{i,j} = (1-k)*W_{i-1} + k*W_i$, where $k$ is related to a location of $I_j$. To be specific, a formula for calculating a ratio of a trajectory distance between the interpolation point $I_j$ and a start point to a trajectory distance between the i - 1 $^{th}$ trajectory point and the i $^{th}$ trajectory point is:

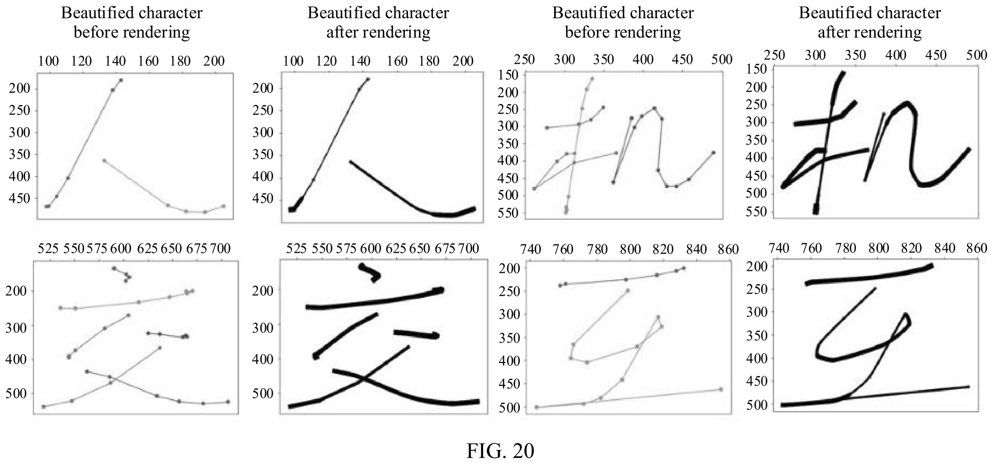

$$k = \frac{\sum_{l=0}^{l=j} dis(I_l, I_{l-1})}{\sum_{l=0}^{l=M+1} dis(I_l, I_{l-1})}$$
. FIG. 20 shows an effect diagram implemented after beautified characters are rendered based on the methods in embodiments.

The foregoing technical solutions may also be understood as follows: The rendering module 340 may determine a calligraphic stroke width of the beautified character, and/or smoothing the calligraphic stroke width of the beautified character; and the rendering module 340 may render the beautified character based on the calligraphic stroke width and/or a smoothed calligraphic stroke width, to generate the beautified character after rendering.

According to the method for rendering a beautified character provided in this application, a change of the calligraphic stroke width of the generated beautified character can be implemented. This is closer to a feature of actually writing a character on the electronic whiteboard by the user, and improves user experience.

It is considered that user experience, a size, a length-width ratio, a location, a direction, and the like of the beautified character should be basically consistent with those of a handwritten character of the user on the electronic whiteboard. Therefore, a beautified character typesetting method is described mainly in this embodiment. This embodiment mainly includes the following four steps.

Step 1: Obtain vector dot matrix data of a character of each handwritten character and vector dot matrix data of a character of each beautified character.

Step 2: Determine format information of each handwritten character.

Step 3: Determine format information of a beautified character based on the format information of each handwritten character, so that the beautified character basically fits a corresponding handwritten character.

Step 4: Optimize a character spacing, a line spacing, and the like of a plurality of beautified characters.

It should be noted that, for the vector dot matrix data of the character of the handwritten character and the vector dot matrix data of the character of each beautified character in step 1, refer to the beautified character before rendering in each group of pictures in FIG. 20. The following describes in detail how to determine the format information of each handwritten character in step 2. The format information of the handwritten character in this application may include, for example, at least one of the following: a location of the handwritten character, a size of the handwritten character, a length-to-width ratio of the handwritten character, and a direction of the handwritten character. To determine the format information of the handwritten character, a location of a key point of a single handwritten character may be first determined.

Similarly, in this application, the "key point" may be a center point such as a "centroid" or a "center" of the character, and is used to quantify coordinate location of the center of the character. This application describes a method for calculating a center based on a convex hull of a handwritten character. To be specific, the convex hull of the character is generated based on a vector dot matrix of a stroke of the character. A lowest point of the convex hull is used as a base point, the convex hull is divided into several triangles, and then a centroid of the convex hull is calculated. The calculated centroid is a coordinate location of a key point of the character. A specific calculation formula is as follows:

Horizontal coordinate of a centroid of a polygon= $\sum$ Horizontal coordinate of a centroid of each triangle obtained through polygon division×(Area of the triangle/Total area of the polygon); and
Vertical coordinate of the centroid of the polygon= $\sum$ Vertical coordinate of the centroid of each triangle obtained through polygon division×(Area of the triangle/Total area of the polygon) .

For example, it is assumed that a convex hull is divided into four triangles: a triangle #1, a triangle #2, a triangle #3, and a triangle #4. In this case, a horizontal coordinate Mx of a centroid of a polygon may be specifically represented as: Mx=x1×f1+x2×f2+x3×f3+x4×f4, where the coefficient f1=s1/Ms, s1 is an area of the triangle #1, and Ms is a total area of the polygon; the coefficient f2=s2/Ms, s2 is an area of the triangle #2, and Ms is the total area of the polygon; the coefficient f13=s3/Ms, s3 is an area of the triangle #3, and Ms is the total area of the polygon; and the coefficient f4=s4/Ms, s4 is an area of the triangle #4, and Ms is the total area of the polygon. Similarly, for the vertical coordinate of the centroid of the polygon, refer to the foregoing example for understanding.

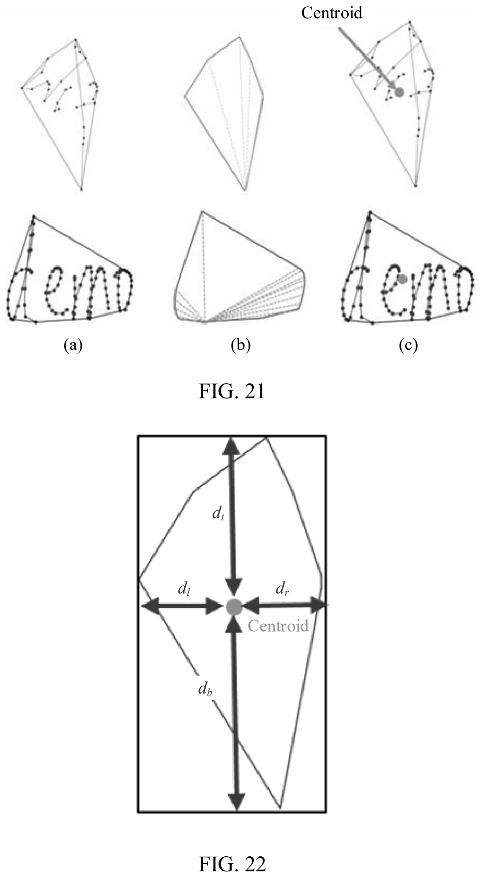

FIG. 21 is a diagram of calculating a centroid of a convex hull based on the foregoing solution. (a) in FIG. 21 is a diagram of generating the convex hull based on a dot matrix of a character, (b) in FIG. 21 is a diagram of dividing the convex hull into a plurality of triangles, and (c) in FIG. 21 is a diagram of calculating the centroid of the convex hull.

Because at least three coordinate points are required for generating a convex hull, if the character is a straight-line character like "一" (a Chinese character that means one) (which may be understood as that there are only two coordinate points), the convex hull may not need to be generated, and a center point of a connection line of the two points may be directly used as a key point of the character.

After the key point of the character is determined, a size of each character and a length-to-width ratio of each character may be calculated. For example, information such as a size or a width-to-height ratio of a handwritten character may be calculated based on a distance between the key point and a rectangular bounding box. As shown in FIG. 22, four parameters $d_l$, $d_r$, $d_t$, and $d_b$ are size parameters of the handwritten character.

The following describes a method for setting a size and a width-to-height ratio of a corresponding beautified character based on the size and the width-to-height ratio of the handwritten character in step 3. The method mainly includes the following four steps.

(1) Align a key point of the beautified character with a key point of an original handwritten character.

(2) Calculate parameters of the original handwritten character: $d_l$, $d_r$, $d_t$, and $d_b$, and size parameters of the beautified character: $d'_l$, $d'_r$, $d'_t$, and $d'_b$. It should be noted that the size parameters of the beautified character may be default initial sizes preset when the beautified character is generated.

(3) Calculate ratio relationships between the size parameters of the handwritten character and the default initial size parameters of the beautified character: $S_l=d_l/d'_l$, $S_r=d_r/d'_r$, $S_t=d_t/d'_t$, and $S_b=d_b/d'_b$.

(4) Calculate a minimum value in four ratio parameters. If the minimum value exists in $S_l$ and $S_r$, a horizontal magnification ratio of the beautified character is $\min\{S_l, S_r\}$, and a vertical magnification ratio is based on a dtw algorithm. To be specific, a value is selected in a range of $(S_t, S_b)$ (usually, linear interpolation is used), so that a similarity between the beautified character and the handwritten character is the highest. Similarly, if the minimum value exists in $S_t$ and $S_b$, a vertical magnification ratio of the beautified character is $\min\{S_t, S_b\}$, and a horizontal magnification ratio is selected in a range of $(S_l, S_r)$.

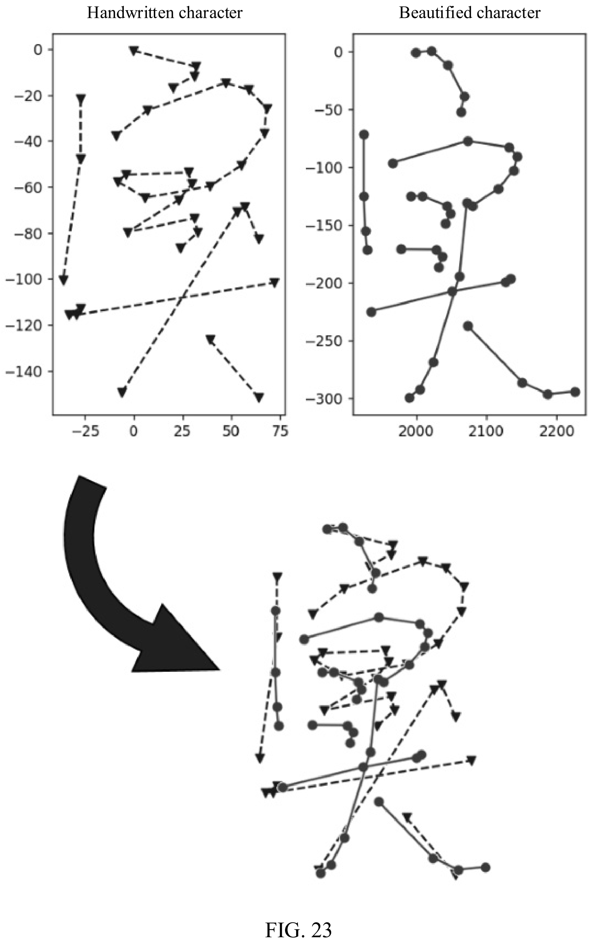

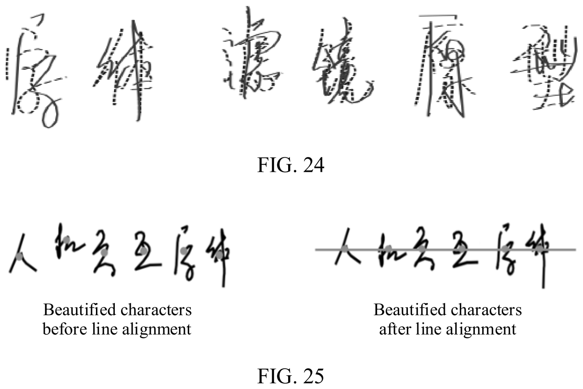

FIG. 23 is an effect diagram of fitting a single beautified character to a corresponding handwritten character after the foregoing solution is used. Similarly, for a plurality of beautified characters, after sizes and ratios of the plurality of beautified characters are separately adjusted, an effect of fitting key points to key points of handwritten characters is shown in FIG. 24.

Based on the foregoing technical solution, in this application, information such as a size and a location of a handwritten character can be retained, so that the handwritten character does not become misplaced after being beautified. Alternatively, it may be understood as that the generated beautified character in this application can be better fitted to the handwritten character.

To make display effects of the plurality of beautified characters neater and more beautiful and improve user experience, this application further proposes to optimize the character spacing, a line spacing, and the like of the plurality of beautified characters. The following mainly describes a typesetting manner mentioned in step 4.

For example, a plurality of beautified characters in a same line may be aligned. An alignment direction is aligning key points of the beautified characters in a beautification line direction. The key point of the beautified character may be the "centroid" or the "center" described above, or may be a "highest point" or a "lowest point" of the beautified character, to respectively implement a center alignment effect, a top alignment effect, and a bottom alignment effect of a single-line text. Horizontal centroid alignment on the beautified characters is used as an example. FIG. 25 shows an effect of line-aligning beautified characters in a same line.

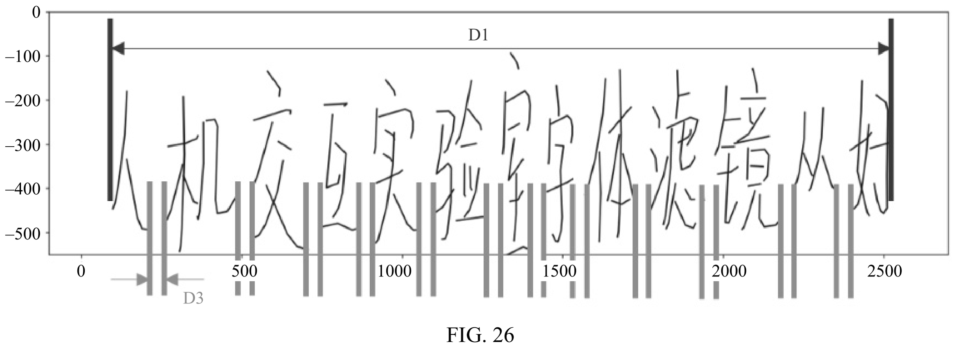

For example, a plurality of beautified characters may be evenly distributed in a single line, that is, adjacent beautified characters in a same line have equal character spacings. In this method, a typesetting effect of the single-line beautified characters is optimized. To be specific, a case in which the beautified characters in the same line are excessively crowded or dispersed does not occur. In this example, a total spacing D1 between the first character and the last character in the line is calculated, and a sum of widths of characters other than the first character and the last character is subtracted from the total spacing D1, to obtain a sum of character spacings D2. Then, D2 is divided by a total quantity N-1 of characters in the single line (for example, N is 13 in FIG. 26), to calculate a character spacing D3 that should be between characters after even distribution. On a premise that locations of the first character and the last character remain unchanged, locations of the other characters are readjusted, so that a spacing between the characters is D3. After typesetting is performed on the beautified characters in the same line by using the method, an effect is shown in FIG. 26.

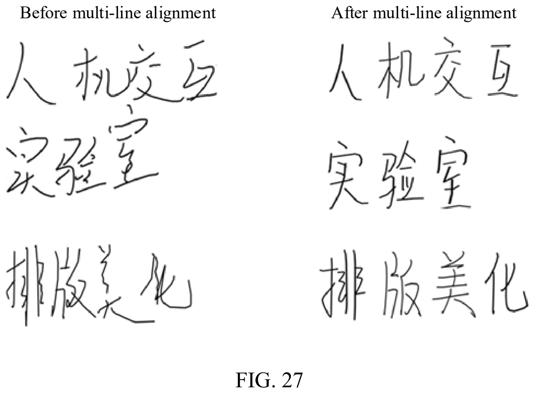

For example, in addition to the unified character spacing, sizes of the single-line or multi-line beautified characters may be normalized based on a handwritten character of the user, so that sizes of the beautified characters in the same line or all beautified characters are consistent. In addition, a minimum rectangular bounding box of a character of each beautified character in the single line, and a minimum rectangular bounding box of each line of characters in the plurality of lines may be uniformly processed, and each line of beautified characters is aligned, for example, left-aligned, centered, or right-aligned. FIG. 27 shows an effect of left alignment and unified character sizes and line spacings.

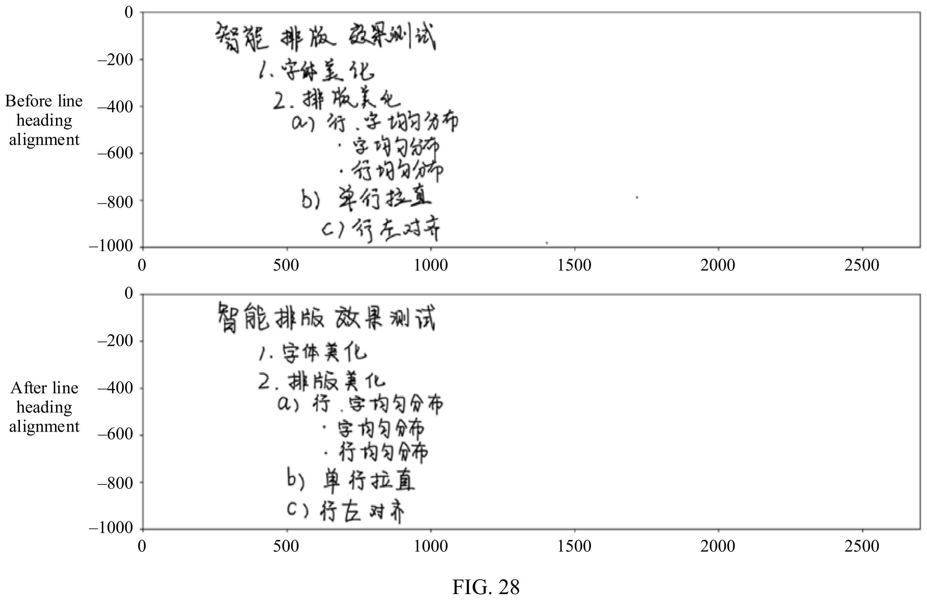

For example, for a plurality of lines of handwritten characters including subheadings, separate alignment may be performed on subheadings of a same type based on a recognition result of an image corresponding to the handwritten characters. A specific determining method for the subheadings of the same type may be: for example, determining, by using the first character or a plurality of texts starting from the first character in each line of characters in the recognition result, whether special text that has a same type of headings is included, for example, a number 1, 2, or 3, a letter a, b, or c, or a special symbol "·"; and aligning line text that has the same type of headings, generally, performing alignment based on a side (for example, a left side or a right side) on which the first character is located. An alignment reference may be the first heading in the same type of headings, or an average value of a plurality of headings may be used for processing. FIG. 28 shows an effect of multi-line heading alignment.

For example, for some punctuations, an alignment manner may not be the same as that of the same line of characters. For example, when another text is center-aligned based on a centroid, quotation marks "" cannot be aligned based on the centroid, but are aligned with a highest location of adjacent characters. Similarly, an alignment manner of a comma "," may be aligning according to a lowest location of the adjacent characters.

The foregoing embodiment mainly describes a method for typesetting beautified characters. The following embodiment specifically describes a typesetting algorithm for typesetting the beautified characters. The typesetting algorithm specifically includes the following steps.

Step 1: Obtain a character segmentation box and a line segmentation box of a handwritten character, and segment each line of handwritten characters in paragraph to obtain a paragraph box.

Step 2: Calculate a size and a key point location of each beautified character based on the paragraph box, to perform typesetting.

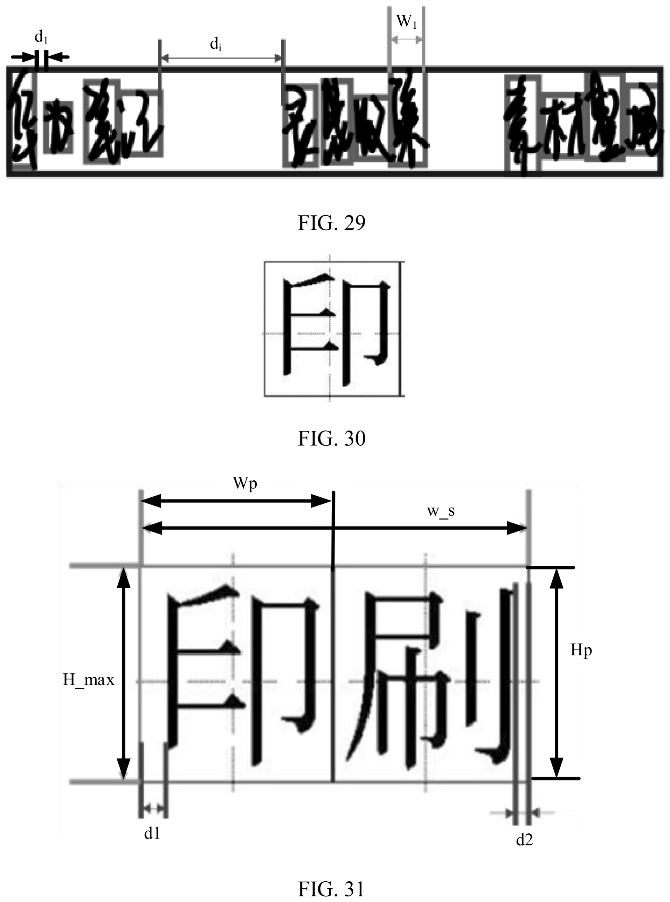

The following first describes an implementation method of step 1. In this application, the character segmentation box and the line segmentation box of the handwritten character may be first obtained. For example, the handwritten character recognition and segmentation module 320 may segment each handwritten character to obtain the character segmentation box and the line segmentation box of the handwritten character. After the character segmentation box and the line segmentation box of the handwritten character are obtained, an average width w of a character box of a single line of characters (a width w1 of a character box of one handwritten character is shown in FIG. 29) and an average spacing d between character boxes (a spacing width d1 between character boxes of two handwritten characters is shown in FIG. 28) may be calculated. If a spacing di between two character boxes exceeds an average value of spacings of first n character boxes and is greater than $s1 \times w$ and $s2 \times d$ (where n, s1, and s2 are preset coefficients), it may be determined that a line of handwriting is segmented into two lines of handwriting at this location (that is, the two character boxes), as shown in FIG. 29.

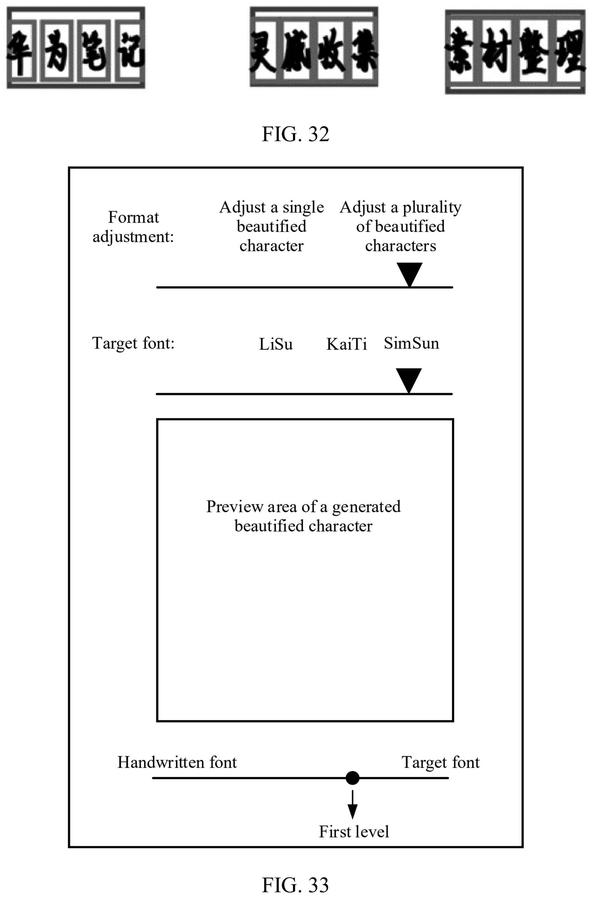

For step 2, this application provides a method for calculating a size and a magnification ratio of a beautified character based on a paragraph box. For a same type of target font, sizes of all characters of the target font are consistent, and each target character has a corresponding character box. FIG. 30 shows a diagram of a character box of a target font. Specifically, in each line of handwriting, a width Wp and a height Hp of a paragraph box may be first obtained, then an image corresponding to the handwritten character is recognized by the handwritten character recognition and segmentation module 320, a corresponding standard character is extracted based on a recognition result, and a beautified character is generated based on a first level. Then, a sum w_s of widths of character boxes of all beautified characters and a maximum character body box height h_max are calculated. Then, a distance d1 from a left edge of a character body frame of a first character in each paragraph to the character and a distance d2 from a right edge of a character body frame of a last character in each paragraph to the character are calculated, as shown in FIG. 31. In this case, the magnification ratio s of the beautified character is min(Wp/(w_s-d1-d2), Hp/h_max). After the magnification ratio of the beautified character is determined, the beautified character may be multiplied by s together with the character box, and then sequentially arranged in a corresponding paragraph box. A leftmost point of a first beautified character is aligned with a left edge of the paragraph box, and a height center of all character body boxes is aligned with a height of the paragraph box. Based on the foregoing solution, an effect of the beautified character is shown in FIG. 32.

It may be understood that, the term "and/or" in this specification merely describes an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 33 is a diagram of beautifying a handwritten character in a user interface according to an embodiment of this application. As shown in FIG. 33, for example, when the handwritten character is beautified, a user may adjust a format of a beautified character. For example, the user may select to adjust a plurality of beautified characters, or select to adjust a plurality of beautified characters. For another example, the user may select SimSun as a target font. For another example, the user may select a first level. A preview area is in a center of the interface, and the preview area is a beautified character generated based on user settings.

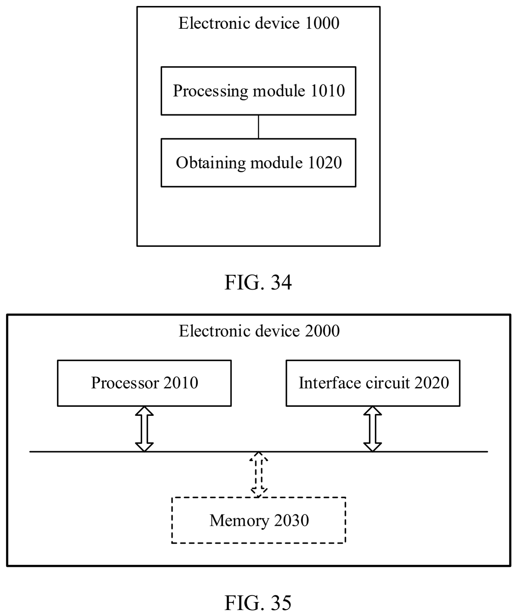

FIG. 34 is a block diagram of an electronic device 1000 according to an embodiment of this application. As shown in FIG. 34, the electronic device 1000 may include a processing module 1010 and an obtaining module 1020.

The foregoing modules are separately configured to perform the steps in the handwritten character beautification method 500. Details are not described herein again.

It should be further understood that the electronic device 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The electronic device 1000 in the foregoing solutions has a function of implementing corresponding steps in the foregoing method 500. The function may be implemented by hardware, or may be implemented by hardware executing corresponding software. The hardware or software includes one or more modules corresponding to the foregoing functions. For example, a determining unit may be replaced with a processor, to separately perform receiving and sending operations and related processing operations in the method embodiments. In addition, the determining unit may be a processing circuit.

It should be noted that the electronic device in FIG. 34 may be the electronic device in the foregoing method embodiments, or may be a chip or a chip system of the electronic device, for example, a system on chip (system on chip, SoC). The processing unit is a processor, a microprocessor, or an integrated circuit that is integrated on the chip. This is not limited herein.

FIG. 35 is a block diagram of another electronic device 2000 according to an embodiment of this application. As shown in the figure, the device 2000 includes at least one processor 2010. The processor 2010 is coupled to a memory, and is configured to execute instructions stored in the memory, to send a signal and/or receive a signal. Optionally, the device 2000 may further include a memory 2030 configured to store instructions. Optionally, the device 2000 further includes a transceiver 2020, and the processor 2010 controls the transceiver 2020 to send a signal and/or receive a signal.

It should be understood the processor 2010 and the memory 2030 may be integrated into one processing device. The processor 2010 is configured to execute program code stored in the memory 2030 to implement the foregoing functions. In a specific implementation, the memory 2030 may also be integrated into the processor 2010, or may be independent of the processor 2010.

It should be further understood that the transceiver 2020 may include a transceiver (or referred to as a receive machine) and a transmitter (or referred to as a transmit machine). The transceiver may further include an antenna. There may be one or more antennas. The transceiver 2020 may be a communication interface or an interface circuit.

Specifically, the processor 2010 in the device 2000 may correspond to the processing unit 1010 and the obtaining module 1020 in the electronic device 1000.

In a solution, the electronic device 2000 is configured to implement the steps in the foregoing embodiment of the method 500.

For example, the processor 2010 is configured to execute the computer program or instructions stored in the memory 2030, to implement the steps in the method 500.

Based on the methods provided in embodiments of this application, this application further provides a computer program product. The computer program product stores computer program code. When the computer program code is run on a computer, the computer is enabled to perform the steps in the foregoing embodiment of the method 500.

Based on the methods provided in embodiments of this application, this application further provides a computer-readable medium. The computer-readable medium stores program code. When the program code is run on a computer, the computer is enabled to perform the steps in the method 500.

For explanations and beneficial effects of related content in any one of the devices provided above, refer to the corresponding method embodiment provided above. Details are not described herein again.

A computer-readable medium is provided, where the computer-readable medium stores program code, and when the program code is run on a computer, the computer is enabled to perform the steps in the method 500.

For explanations and beneficial effects of related content in any one of the devices provided above, refer to the corresponding method embodiment provided above. Details are not described herein again.

It should be understood that a specific process in which the transceiver and the processor perform the corresponding steps is described in detail in the foregoing method embodiments. For brevity, details are not described herein again.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the device embodiments, corresponding modules or units perform corresponding steps. For example, the transceiver unit (transceiver) performs receiving or sending steps in the method embodiments, and steps other than the sending and receiving steps may be performed by the processing unit (processor). For a function of a specific unit, refer to a corresponding method embodiment. There may be one or more processors.

The terms such as "component", "module", and "system" used in this specification are used to indicate computer-related entities, hardware, firmware, combinations of hardware and software, software, or software being executed. For example, a component may be, but is not limited to, a process that runs on a processor, the processor, an object, an executable file, an execution thread, a program, and/or a computer. As illustrated by using figures, both an electronic device and an application that runs on the electronic device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, device, and unit, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A handwritten character beautification method, comprising:

   obtaining information about a first handwritten character, wherein the first handwritten character is a character written by a user on a handwriting area of an electronic device;
   detecting a first input operation of the user, and obtaining information about a first level in response to the first input operation;
   determining a fusion style based on the information about the first level, a handwritten character library, and a target font, wherein the handwritten character library comprises a character written by the user on the handwriting area of the electronic device and stored in the electronic device, the target font is one of fonts preset in a target font library of the electronic device, the fusion style indicates a style obtained after the target font and a handwritten font corresponding to the character comprised in the handwritten character library are fused, and the first level is used to determine a ratio between a target font style corresponding to the target font and a handwritten font style corresponding to the handwritten font in the fusion style; and
   generating a first beautified character, wherein the first beautified character is the first handwritten character beautified based on the information about the first handwritten character and the fusion style.

2. The method according to claim 1, wherein the fonts preset in the target font library of the electronic device comprise at least two fonts, and the method further comprises:

receiving a second instruction, wherein the second instruction indicates the target font, and the target font is one of the at least two fonts; and
determining the target font according to the second instruction.

3. The method according to claim 1 or 2, wherein the method further comprises:

receiving a third instruction, wherein the third instruction indicates a second handwritten character, the second handwritten character is the character written by the user on the handwriting area and stored in the electronic device, and the second handwritten character is used to generate the handwritten character library; and
generating the handwritten character library according to the third instruction, wherein the handwritten character library comprises one or more second handwritten characters.

4. The method according to claim 3, wherein the method further comprises:

receiving a fourth instruction, wherein the fourth instruction indicates to update the second handwritten character in the handwritten character library; and
generating an updated handwritten character library according to the fourth instruction, wherein the updated handwritten character library comprises one or more updated second handwritten characters.

5. The method according to claim 3 or 4, wherein determining the fusion style based on the information about the first level, the handwritten character library, and the target font comprises:

determining, based on the information about the first level, a first quantity of the second handwritten characters and a second quantity of target characters corresponding to the target font, wherein the first quantity and the second quantity are determined based on the information about the first level; and
determining the fusion style based on the first quantity of the second handwritten characters and the second quantity of the target characters.

6. The method according to claim 5, wherein the method further comprises:

determining a first ratio based on the information about the first level, wherein the first ratio is a ratio between the second quantity and the first quantity; and
determining the first quantity and the second quantity based on the first ratio.

7. The method according to any one of claims 1 to 6, wherein generating the first beautified character comprises:

determining, based on the information about the first handwritten character, a standard character corresponding to the first handwritten character, wherein the standard character is a character preset in a standard character library of the electronic device; and
generating the first beautified character based on the standard character and the fusion style.

8. The method according to claim 7, wherein generating the first beautified character based on the standard character and the fusion style comprises:

extracting a content feature corresponding to the standard character, wherein the content feature is used to determine the standard character; and
generating the first beautified character based on the content feature and the fusion style.

9. The method according to claim 8, wherein the method further comprises:

determining stroke information of the standard character, wherein the stroke information comprises a stroke order of the standard character and/or a stroke type of the standard character; and
generating the first beautified character based on the content feature and the fusion style comprises:
generating the first beautified character based on the content feature, the fusion style, and the stroke information of the standard character.

10. The method according to any one of claims 7 to 9, wherein generating the first beautified character based on the standard character and the fusion style comprises:

generating the first beautified character based on the standard character, the fusion style, and a first model, wherein a training dataset of the first model comprises at least one of the following: a handwritten character training dataset, a target character training dataset, and a beautified character training dataset, and the beautified character training dataset comprises training beautified characters at different first levels.

11. The method according to any one of claims 1 to 10, wherein the method further comprises:

determining a calligraphic stroke width of the first beautified character, and/or smoothing the calligraphic stroke width of the first beautified character; and
rendering the first beautified character based on the calligraphic stroke width and/or a smoothed calligraphic stroke width, to generate the first beautified character after rendering.

12. The method according to any one of claims 1 to 11, wherein the method further comprises:

determining format information of the first handwritten character, wherein the format information of the first handwritten character comprises at least one of the following: a location of the first handwritten character, a size of the first handwritten character, a length-width ratio of the first handwritten character, and a direction of the first handwritten character;
determining format information of the first beautified character based on the format information of the first handwritten character, wherein the format information of the first beautified character comprises at least one of the following: a location of the first beautified character, a size of the first beautified character, a length-width ratio of the first beautified character, and a direction of the first beautified character; and
performing single-character adjustment on the first beautified character based on the format information of the first beautified character.

13. The method according to claim 12, wherein the method further comprises:
performing multi-character adjustment on a plurality of first beautified characters, wherein the multi-character adjustment comprises at least one of the following: adjusting a character spacing between adjacent first beautified characters; and/or line-aligning the plurality of first beautified characters; and/or adjusting sizes of all first beautified characters in one or more lines.

14. The method according to any one of claims 1 to 13, wherein the information about the first handwritten character comprises an image corresponding to the first handwritten character and/or a trajectory corresponding to the first handwritten character.

15. An electronic device, comprising an obtaining module and a processing module, wherein

the obtaining module is configured to obtain information about a first handwritten character, wherein the first handwritten character is a character written by a user on a handwriting area of the electronic device;
the obtaining module is configured to: detect a first input operation of the user, and obtain information about a first level in response to the first input operation;
the processing module is configured to determine a fusion style based on the information about the first level, a handwritten character library, and a target font, wherein the handwritten character library comprises a character written by the user on the handwriting area of the electronic device and stored in the electronic device, the target font is one of fonts preset in a target font library of the electronic device, the fusion style indicates a style obtained after the target font and a handwritten font corresponding to the character comprised in the handwritten character library are fused, and the first level is used to determine a ratio between a target font style corresponding to the target font and a handwritten font style corresponding to the handwritten font in the fusion style; and
the processing module is configured to generate a first beautified character, wherein the first beautified character is the first handwritten character beautified based on the information about the first handwritten character and the fusion style.

16. The electronic device according to claim 15, wherein the fonts preset in the target font library of the electronic device comprise at least two fonts;

the obtaining module is configured to receive a second instruction, wherein the second instruction indicates the target font, and the target font is one of the at least two fonts; and
the processing module is configured to determine the target font according to the second instruction.

**17.** The electronic device according to claim 15 or 16, wherein

the obtaining module is configured to receive a third instruction, wherein the third instruction indicates a second handwritten character, the second handwritten character is the character written by the user on the handwriting area and stored in the electronic device, and the second handwritten character is used to generate the handwritten character library; and

the processing module is configured to generate the handwritten character library according to the third instruction, wherein the handwritten character library comprises one or more second handwritten characters.

**18.** The electronic device according to claim 17, wherein

the obtaining module is configured to receive a fourth instruction, wherein the fourth instruction indicates to update the second handwritten character in the handwritten character library; and

the processing module is configured to generate an updated handwritten character library according to the fourth instruction, wherein the updated handwritten character library comprises one or more updated second handwritten characters.

**19.** The electronic device according to claim 17 or 18, wherein that the processing module is configured to determine the fusion style based on the information about the first level, the handwritten character library, and the target font comprises:

the processing module is configured to determine, based on the information about the first level, a first quantity of the second handwritten characters and a second quantity of target characters corresponding to the target font, wherein the first quantity and the second quantity are determined based on the information about the first level; and

the processing module is configured to determine the fusion style based on the first quantity of the second handwritten characters and the second quantity of the target characters corresponding to the target font.

**20.** The electronic device according to claim 19, wherein

the processing module is configured to determine a first ratio based on the information about the first level, wherein the first ratio is a ratio between the second quantity and the first quantity; and

the processing module is configured to determine the first quantity and the second quantity based on the first ratio.

**21.** The electronic device according to any one of claims 15 to 20, wherein that the processing module is configured to generate the first beautified character comprises:

the processing module is configured to determine, based on the information about the first handwritten character, a standard character corresponding to the first handwritten character, wherein the standard character is a character preset in a standard character library of the electronic device; and

the processing module is configured to generate the first beautified character based on the standard character and the fusion style.

**22.** The electronic device according to claim 21, wherein that the processing module is configured to generate the first beautified character based on the standard character and the fusion style comprises:

the processing module is configured to extract a content feature corresponding to the standard character, wherein the content feature is used to determine the standard character; and

the processing module is configured to generate the first beautified character based on the content feature and the fusion style.

**23.** The electronic device according to claim 22, wherein

the processing module is further configured to determine stroke information of the standard character, wherein the stroke information comprises a stroke order of the standard character and/or a stroke type of the standard character; and

that the processing module is configured to generate the first beautified character based on the content feature and the fusion style comprises:

the processing module is configured to generate the first beautified character based on the content feature, the fusion style, and the stroke information of the standard character.

24. The electronic device according to any one of claims 21 to 23, wherein that the processing module is configured to generate the first beautified character based on the standard character and the fusion style comprises:
the processing module is configured to generate the first beautified character based on the standard character, the fusion style, and a first model, wherein a training dataset of the first model comprises at least one of the following: a handwritten character training dataset, a target character training dataset, and a beautified character training dataset, and the beautified character training dataset comprises training beautified characters at different first levels.

25. The electronic device according to any one of claims 15 to 24, wherein

the processing module is configured to: determine a calligraphic stroke width of the first beautified character, and/or smooth the calligraphic stroke width of the first beautified character; and
the processing module is configured to render the first beautified character based on the calligraphic stroke width and/or a smoothed calligraphic stroke width, to generate the first beautified character after rendering.

26. The electronic device according to any one of claims 15 to 25, wherein

the processing module is configured to determine format information of the first handwritten character, wherein the format information of the first handwritten character comprises at least one of the following: a location of the first handwritten character, a size of the first handwritten character, a length-width ratio of the first handwritten character, and a direction of the first handwritten character;
the processing module is configured to determine format information of the first beautified character based on the format information of the first handwritten character, wherein the format information of the first beautified character comprises at least one of the following: a location of the first beautified character, a size of the first beautified character, a length-width ratio of the first beautified character, and a direction of the first beautified character; and
the processing module is configured to perform single-character adjustment on the first beautified character based on the format information of the first beautified character.

27. The electronic device according to claim 26, wherein
the processing module is further configured to perform multi-character adjustment on a plurality of first beautified characters, wherein the multi-character adjustment comprises at least one of the following: adjusting a character spacing between adjacent first beautified characters; and/or line-aligning the plurality of first beautified characters; and/or adjusting sizes of all first beautified characters in one or more lines.

28. The electronic device according to any one of claims 15 to 27, wherein the information about the first handwritten character comprises an image corresponding to the first handwritten character and/or a trajectory corresponding to the first handwritten character.

29. An electronic device, wherein the electronic device comprises a processor and a memory, the memory is configured to store a computer program or instructions, and the processor is configured to execute the computer program or the instructions stored in the memory, so that the method according to any one of claims 1 to 14 is performed.

30. A chip system, comprising a processor, wherein the processor is configured to: invoke a computer program from a memory and run the computer program, so that a terminal device on which the chip system is installed performs the method according to any one of claims 1 to 14.

31. A computer-readable storage medium, wherein the computer-readable storage medium stores a computer program, and when the computer program is run on a computer, the computer is caused to perform the method according to any one of claims 1 to 14.

32. A computer program product, wherein the computer program product comprises instructions used to perform the method according to any one of claims 1 to 14.

Electronic device 100

Antenna 1                                    Antenna 2

| Mobile communication module<br>2G/3G/4G/5G<br>[150] | | Wireless communication module<br>BT/WLAN/GNSS/NFC/IR/FM<br>[160] |

| Speaker<br>[170A] | | |
| Receiver<br>[170B] | Audio<br>module<br>[170] | |
| Microphone<br>[170C] | | |
| Headset jack<br>[170D] | | |

| Displays 1 to N [194] |
| Cameras 1 to N [193] |
| Indicator [192] |
| Motor [191] |
| Button [190] |
| Internal memory [121] |
| SIM card interfaces<br>1 to N [195] |
| Interface [120] for<br>external memory |

Processor
[110]

Sensor module [180]

| Pressure sensor<br>[180A] |
| Gyroscope sensor<br>[180B] |
| Barometric pressure<br>sensor [180C] |
| Magnetic sensor<br>[180D] |
| Acceleration sensor<br>[180E] |
| Distance sensor<br>[180F] |
| Optical proximity<br>sensor [180G] |
| Fingerprint sensor<br>[180H] |
| Temperature sensor<br>[180J] |
| Touch sensor [180K] |
| Ambient light sensor<br>[180L] |
| Bone conduction<br>sensor [180M] |

USB interface [130]

Charging
input

Charging
management
module
[140]

Power
management
module [141]

Battery [142]

FIG. 1

| Application layer | Camera | Calendar | Maps | WLAN | Music | Messaging |
| | Gallery | Phone | Navigation | Bluetooth | Videos | ... |

| Application framework layer | Window manager | Content provider | Phone manager | Resource manager |
| | Notification manager | View system | ... | |

| System library | Surface manager | Three-dimensional graphics processing library | |
| | Two-dimensional graphics engine | Media library | Image processing library | ... |

| Kernel layer | Display driver | Camera driver | |
| | Audio driver | Sensor driver | ... |

FIG. 2

Handwritten character recognition and segmentation module 320

Character segmentation

Handwriting recognition

User input module 310

Handwritten character

Target font selection

First level

Beautification module 330

Trajectory processing

Handwritten character set

Target character set

Standard character

Handwritten character set, target character set, and standard character

Generate a beautified character after decoding and reconstruction

Rendering module 340

Perform rendering based on a calligraphic stroke width, a beautified character color, a beautified character texture, a beautified character opacity, a calligraphic stroke, and the like

Typesetting module 350

Size, length-width ratio, location, orientation, character spacing, and line spacing of a character

Output the beautified character to replace the handwritten character

FIG. 3

人机交互实验室字体滤镜原型从好

FIG. 4

Method 500

| 510: Obtain information about a first handwritten character |
| --- |

| 520: Detect a first input operation of a user, and obtain information about a first level in response to the first input operation |
| --- |

| 530: Determine a fusion style based on the information about the first level, a handwritten character library, and a target font |
| --- |

| 540: Generate a first beautified character |
| --- |

FIG. 5

Standard character
corresponding to a
first handwritten
character

Handwritten character set
and target character set

Content extractor
Content Encoder

Style extractor
Style Encoder

Attention
mechanism
Attention

Attention
mechanism
Attention

Decoder
Decoder

Beautified
character

Handwritten character set

Target character set

FIG. 6

FIG. 7

Standard character
corresponding to a
first handwritten
character

Handwritten
character set and
target character set

Content extractor
Content Encoder

Style extractor
Style Encoder

Attention
mechanism
Attention

**Reshape
+
Splice**

Attention
mechanism
Attention

Decoder
Decoder

Beautified
character

FIG. 8

FIG. 9

EP 4 693 092 A1

Standard character corresponding to a first handwritten character → Content extractor Content Encoder

Attention mechanism Attention

Handwritten character set and target character set → Style extractor Style Encoder

**Handwritten font style×First coefficient + Target font style×Second coefficient**

Attention mechanism Attention

Decoder Decoder → Beautified character

FIG. 10

字　　　　体　　　　滤　　　　镜　**Handwritten character**

| 字 字 | 体 体 | 滤 滤 | 镜 镜 | 20% | |
| 字 字 | 体 体 | 滤 滤 | 镜 镜 | 50% | **First level** |
| 字 字 | 体 体 | 滤 滤 | 镜 镜 | 80% | |
| 字 字 | 体 体 | 滤 滤 | 镜 镜 | 100% | |

字　字　　体　体　　滤　滤　　镜　镜　**Target character**

**Font #1　Font #2　　Font #1　Font #2　　Font #1　Font #2　　Font #1　Font #2**

FIG. 11

Handwritten character  Target character  Beautified character  Handwritten character  Target character  Beautified character

pts:34, strokes:6  pts:65, strokes:10  pts:87, strokes:8  pts:13, strokes:3  pts:37, strokes:4  pts:47, strokes:2

FIG. 12

EP 4 693 092 A1

Stroke information
of a standard
character
corresponding to a
first handwritten
character

Standard character
corresponding to
the first
handwritten
character

Handwritten character set
and target character set

Stroke encoding
module
Strokes Encoder

Content extractor
Content Encoder

Attention mechanism
Attention

Style extractor
Style Encoder

Attention mechanism
Attention

Decoder
Decoder

Beautified
character

FIG. 13

| Handwritten character pts:34, strokes:6 | Target character pts:65, strokes:10 | Beautified character pts:76, strokes:10 | Handwritten character pts:13, strokes:3 | Target character pts:37, strokes:4 | Beautified character pts:36, strokes:4 |
| --- | --- | --- | --- | --- | --- |

Beautification effects of beautified characters generated after a stroke order is introduced

| Handwritten character pts:34, strokes:6 | Target character pts:65, strokes:10 | Beautified character pts:78, strokes:9 | Handwritten character pts:13, strokes:3 | Target character pts:37, strokes:4 | Beautified character pts:34, strokes:4 |
| --- | --- | --- | --- | --- | --- |

Beautification effects of beautified characters generated after a stroke type is introduced

FIG. 14

**Step 1:**
**Training phase #A**

Training standard character

Handwritten character training dataset or target character training dataset

Content extractor
Content Encoder

Style extractor
Style Encoder

Attention mechanism
Attention

Attention mechanism
Attention

Decoder
Decoder

Generated character

**Step 2:**
**Inference phase #A**

Training standard character

Training handwritten character set and training target character set

Content extractor
Content Encoder

Style extractor
Style Encoder

Attention mechanism
Attention

Attention mechanism
Attention

Decoder
Decoder

Training beautified character corresponding to a level

TO
FIG. 15B

FIG. 15A

EP 4 693 092 A1

**Step 3:**
**Training phase #B**

Training standard character → Content extractor Content Encoder

Beautified character training dataset → Style extractor Style Encoder

Attention mechanism Attention

Attention mechanism Attention

Decoder Decoder → Generated character

**Step 4:**
**Inference phase #B**

Standard character corresponding to a first handwritten character → Content extractor Content Encoder

Handwritten character set and target character set → Style extractor Style Encoder

Attention mechanism Attention

Attention mechanism Attention

Decoder Decoder → First beautified character

FIG. 15B

EP 4 693 092 A1

FIG. 16

EP 4 693 092 A1

EP 4 693 092 A1

```
┌─────────────────────────────┐
│ 1401: Generate trajectory   │
│ points of a beautified      │
│ character                   │
└─────────────────────────────┘
              │
              ▼
┌─────────────────────────────┐          ┌─────────────────────────────┐
│ 1402: Determine a stroke    │◄──────    │ 1411: Generate the          │
│ and sample the stroke       │          │ calligraphic stroke width   │
└─────────────────────────────┘          └─────────────────────────────┘
```

1401: Generate trajectory points of a beautified character

1402: Determine a stroke and sample the stroke

Quantity of sampling points>2

Yes

No 1406

1403: Remove a redundant point according to an RDP algorithm

Quantity of sampling points>4

No

Yes

1405: Use original sampling points

1404: Calculate a calligraphic stroke width based on a dispersion degree of the sampling points

Quantity of sampling points>4

Yes

No

1407: Perform interpolation by using a Bezier interpolation method

1408: Perform interpolation by using a linear interpolation method

1409: Calculate a calligraphic stroke width of an interpolation point

1410: Smooth the calligraphic stroke width

Is it a last stroke

No 1412

Yes

1411: Generate the calligraphic stroke width

FIG. 17

S Function

FIG. 18

FIG. 19

FIG. 20

Centroid

(a)  (b)  (c)

FIG. 21

$d_t$

$d_l$  $d_r$

Centroid

$d_b$

FIG. 22

Handwritten character　　　　　　Beautified character

FIG. 23

FIG. 24

Beautified characters
before line alignment

Beautified characters
after line alignment

FIG. 25

FIG. 26

Before multi-line alignment          After multi-line alignment

FIG. 27

智能 排版 效果测试
1. 字体美化
2. 排版美化
a) 行. 字内匀分布
. 字内匀分布
. 行内匀分布
b) 单行拉直
c) 行左对齐

Before line heading alignment

0    500    1000    1500    2000    2500

0
-200
-400
-600
-800
-1000

智能 排版 效果测试
1. 字体美化
2. 排版美化
a) 行. 字内匀分布
. 字内匀分布
. 行内匀分布
b) 单行拉直
c) 行左对齐

After line heading alignment

0    500    1000    1500    2000    2500

0
-200
-400
-600
-800
-1000

FIG. 28

FIG. 29

FIG. 30

FIG. 31

FIG. 32

Format
adjustment:     Adjust a single     Adjust a plurality
                beautified          of beautified
                character           characters

                                        ▼

Target font:         LiSu      KaiTi    SimSun

                                        ▼

Preview area of a generated
beautified character

Handwritten font                    Target font

First level

FIG. 33

Electronic device 1000

Processing module 1010

Obtaining module 1020

FIG. 34

Electronic device 2000

Processor 2010

Interface circuit 2020

Memory 2030

FIG. 35

## INTERNATIONAL SEARCH REPORT

| International application No. |
|---|
| **PCT/CN2024/117410** |

| A. | CLASSIFICATION OF SUBJECT MATTER |
|---|---|

G06F40/109(2020.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; IEEE; CNKI: 手写, 字体, 美化, 风格, 融合, 档位, 权重, handwriting, font, beautification, style, fusion, gear, weight

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114418834 A (BEIJING ZITIAO NETWORK TECHNOLOGY CO., LTD.) 29 April 2022 (2022-04-29) description, paragraphs 32-100 and 132-144 | 1-4, 7-18, 21-32 |
| X | CN 101308578 A (SOUTH CHINA UNIVERSITY OF TECHNOLOGY) 19 November 2008 (2008-11-19) description, pages 5-10 | 1-4, 7-18, 21-32 |
| PX | CN 117807989 A (HUAWEI TECHNOLOGIES CO., LTD.) 02 April 2024 (2024-04-02) description, paragraphs 114-181 | 1-4, 7-18, 21-32 |
| A | CN 112818145 A (SHANGHAI YIQI INFORMATION TECHNOLOGY CO., LTD.) 18 May 2021 (2021-05-18) description, paragraphs 27-44 | 1-32 |
| A | CN 102158825 A (SOUTH CHINA UNIVERSITY OF TECHNOLOGY) 17 August 2011 (2011-08-17) entire document | 1-32 |
| A | US 2006274943 A1 (MICROSOFT CORP.) 07 December 2006 (2006-12-07) entire document | 1-32 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 December 2024** | **19 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/117410**

| Patent document cited in search report | | | Publication date (day/month/year) | Patent family member(s) | | | Publication date (day/month/year) |
|---|---|---|---|---|---|---|---|
| CN | 114418834 | A | 29 April 2022 | WO | 2023125361 | A1 | 06 July 2023 |
| CN | 101308578 | A | 19 November 2008 | CN | 101308578 | B | 01 September 2010 |
| CN | 117807989 | A | 02 April 2024 | WO | 2024066490 | A1 | 04 April 2024 |
| CN | 112818145 | A | 18 May 2021 | CN | 112818145 | B | 09 September 2022 |
| CN | 102158825 | A | 17 August 2011 | | None | | |
| US | 2006274943 | A1 | 07 December 2006 | US | 7865018 | B2 | 04 January 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311167833